(19) Europäisches Patentamt / European Patent Office / Office européen des brevets

(11) **EP 4 489 342 B1**

(12) **EUROPEAN PATENT SPECIFICATION**

(45) Date of publication and mention
of the grant of the patent:
**11.02.2026  Bulletin 2026/07**

(21) Application number: **24166180.0**

(22) Date of filing: **26.03.2024**

(51) International Patent Classification (IPC):
***H04L 9/00*** *(2022.01)*

(52) Cooperative Patent Classification (CPC):
**H04L 9/008;** H04L 2209/12; H04L 2209/125

(54) **RECONFIGURABLE COMPUTE CIRCUITRY TO PERFORM FULLY HOMOMORPHIC ENCRYPTION (FHE) TO MAP UNCONSTRAINED POWERS-OF-2 FHE POLYNOMIALS**

REKONFIGURIERBARE RECHENSCHALTUNG ZUR DURCHFÜHRUNG VON VOLLSTÄNDIG HOMOMORPHER VERSCHLÜSSELUNG (FTE) ZUR ABBILDUNG VON UNEINGESCHRÄNKTEN POTENZEN VON 2-FTE-POLYNOMEN

CIRCUIT DE CALCUL RECONFIGURABLE POUR EFFECTUER UN CHIFFREMENT ENTIÈREMENT HOMOMORPHE (FHE) POUR MAPPER DES POLYNÔMES DE PUISSANCES DE 2 FHE NON CONTRAINTES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **01.07.2023   US 202318217561**

(43) Date of publication of application:
**08.01.2025   Bulletin 2025/02**

(73) Proprietor: **INTEL Corporation
Santa Clara, CA 95054 (US)**

(72) Inventors:
• **Kumar, Raghavan**
**Hillsboro, OR, 97124 (US)**
• **Mathew, Sanu K.**
**Portland, OR, 97229 (US)**
• **Taneja, Sachin**
**Hillsboro, OR, 97124 (US)**
• **Wilkerson, Christopher B.**
**Vancouver (US)**
• **Zhou, Minxuan**
**San Diego, CA, 92121 (US)**

(74) Representative: **Samson & Partner Patentanwälte mbB
Widenmayerstraße 6
80538 München (DE)**

(56) References cited:
**US-A1- 2018 294 950      US-A1- 2023 171 084**

• **JONATAN GILBERT ET AL: "Scalability Limitations of Processing-in-Memory using Real System Evaluations", PROCEEDINGS OF THE ACM ON MEASUREMENT AND ANALYSIS OF COMPUTING SYSTEMS, ACMPUB27, NEW YORK, NY, USA, vol. 8, no. 1, 21 February 2024 (2024-02-21), pages 1 - 28, XP059300792, DOI: 10.1145/3639046**

**Description**

STATEMENT REGARDING FEDERALLY SPONSORED RESEARCH

This invention was made with Government support under contract number HR0011-21-3-0003-0104 awarded by the Department of Defense. The Government has certain rights in this invention.

BACKGROUND

Homomorphic encryption is a form of encryption that allows computations to be performed on encrypted data without first having to decrypt it. The computations are performed on polynomials. The degree of a polynomial is the highest of the degrees of the polynomial's individual terms with non-zero coefficients. The degree of a term is the sum of the exponents of the variables in the term. The degree of the polynomial is the highest exponent in the polynomial.

For example, the polynomial $5x^2y^4 + 3x - 10$ has three terms, two variables (x, y) and two coefficients (number that is being multiplied by a variable). The first term has a degree of 6 (the sum of exponent 2 and exponent 4), the second term has a degree of 1 and the third term has a degree of 0. The polynomial has a degree of 6 (the highest exponent in the polynomial).

Fully Homomorphic Encryption (FHE) enables computation on encrypted data, or ciphertext, rather than plaintext, or unencrypted data, keeping data protected at all times. FHE uses lattice cryptography, which presents complex mathematical challenges to would-be attackers.

FHE standards support a wide range of polynomials, with the degree of the polynomial ranging from 1024 (1K) up to 128K and where each coefficient in the polynomial can range from 32 bits up to 2K bits dependent on the degree of the polynomial.

Further prior art solutions are disclosed in documents US 2018/294950 A1 and US 2023/171084 A1.

BRIEF DESCRIPTION OF DRAWINGS

Various examples in accordance with the present disclosure will be described with reference to the drawings, in which:

FIG. 1 is a block diagram of compute circuitry to perform FHE that is optimized for 16K polynomials;
FIG. 2 illustrates a block diagram of compute circuitry to perform FHE that is optimized for 1024 (1K) coefficient polynomials;
FIG. 3 illustrates an example system;
FIG. 4 illustrates an example of a FHE accelerator;
FIG. 5 illustrates examples of a FHE compute engine tile;
FIG. 6 is a block diagram of the FHE accelerator to perform FHE computations on multiple independent N* 1024 polynomials mapped onto a (M*N)*1024 polynomial;
FIG. 7 is a block diagram illustrating a compute element with a configurable output data bypass mode in a tile in the tile array in compute engine in the FHE accelerator;
FIG. 8 is a block diagram of FHE accelerator to perform computations on multiple independent NK polynomials mapped onto a (M*N)*1024 polynomial illustrating the distribution of output coefficients of the four 1024 polynomials shown in FIG. 6 after an NTT operation has been performed on the four 1024 polynomials;
FIG. 9A illustrates examples of an instruction format;
FIG. 9B illustrates a polynomial iNTT data movement instruction to convert the word-interleaved coefficients shown in FIG. 6 to contiguous form;
FIG. 10 is a block diagram of the FHE accelerator to perform computations on multiple independent N* 1024 polynomials mapped onto a (M*N)*1024 polynomial after conversion of the word-interleaved coefficients shown in FIG. 8 to contiguous form performed by the iNTT data movement instruction;
FIG. 11 illustrates the use of scratch pad memory to store coefficients after conversion of the word-interleaved coefficients shown in FIG. 8 to contiguous form as shown in FIG. 10;
FIG. 12 is a table illustrating performance improvement for the FHE accelerator to perform computations on multiple independent N*1024 polynomials mapped onto a compute engine for a (M*N)*1024 polynomial as described in conjunction with FIG. 6 and FIG. 7;
FIG. 13 illustrates an example computing system; and
FIG. 14 illustrates a block diagram of an example SoC that may have one or more processor cores and an integrated memory controller.
FIG. 15(A) is a block diagram illustrating both an example in-order pipeline and an example register renaming, out-of-order issue/execution pipeline according to examples.

FIG. 15(B) is a block diagram illustrating both an example in-order architecture core and an example register renaming, out-of-order issue/execution architecture core to be included in a processor according to examples.

FIG. 16 illustrates examples of execution unit(s) circuitry.

FIG. 17 is a block diagram of a register architecture according to some examples.

FIG. 18 illustrates examples of an addressing information field.

FIG. 19 illustrates examples of a first prefix.

FIGS. 20(A)-(D) illustrate examples of how the R, X, and B fields of the first prefix in FIG. 19 are used.

FIGS. 21(A)-(B) illustrate examples of a second prefix.

FIG. 22 illustrates examples of a third prefix.

FIG. 23 is a block diagram illustrating the use of a software instruction converter to convert binary instructions in a source instruction set architecture to binary instructions in a target instruction set architecture according to examples.

DETAILED DESCRIPTION

The objects of the present invention are achieved by means of the appended set of claims. Typically, compute circuitry to perform Fully Homomorphic Encryption (FHE) has compute elements that are optimized for a particular size polynomial (for example, 8192 (8K) compute elements to perform operations) on polynomials with degree 16K (16384). Compute circuitry to perform Fully Homomorphic Encryption also includes dedicated data movement techniques (point-to-point or 2D-Mesh interconnect) to shuffle the coefficients during Number-Theoretic-Transforms (NTT) and inverse-NTT operations, which are critical operations in a FHE workload.

However, compute circuitry to perform FHE that is optimized for a polynomial with a particular degree suffers from severe underutilization of compute resources and data movement resources when smaller polynomials with degrees 1024 (1K) to <16 *1024 (1K) are mapped on to compute circuitry to perform FHE (FHE accelerator). For example, mapping a 1K polynomial to compute circuitry on an FHE accelerator that is optimized for polynomials with degree 16K results in 16x underutilization of the compute elements in the FHE accelerator.

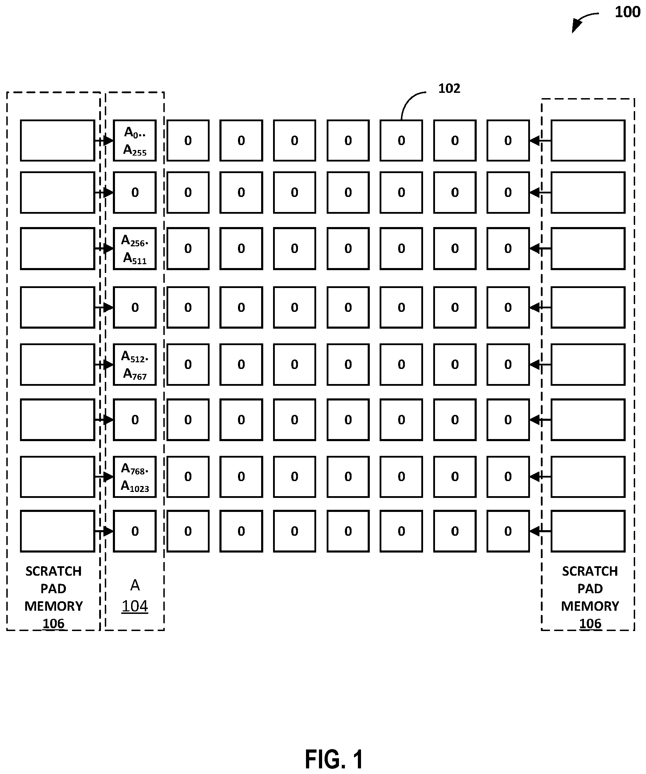

FIG. 1 is a block diagram of an FHE accelerator 100 that is optimized for 16K polynomials. The FHE accelerator 100 has a scratch pad memory 106 and a compute engine with 64 tiles organized in an array with 8 rows and 8 columns. Each tile 102 has 128 compute elements, the array of 64 tiles in the compute engine provides 8192 (8K) compute elements to perform 16K polynomial operations. Column 104 stores a 1K polynomial (coefficients $A_0 ... A_{1023}$) that uses 512 compute elements in four tiles in odd rows (with coefficients $A_0 ... A_{255}$ stored in row 1, coefficients $A_{256} ... A_{511}$ stored in row 3, coefficients $A_{512} ... A_{767}$ stored in row 5, and coefficients $A_{768} ... A_{1023}$ stored in row 7. The 1K polynomial is zero padded such that the length matches the number of tiles with 0 stored in all of the other tiles (60 tiles) to match 16K coefficients which results in 16x underutilization of the compute elements in the FHE accelerator 100. After the computations on the 16K polynomial, the result of the 1K polynomial operations can be extracted by tracking the number of zeroes added to the 1K polynomial. Zero-padding results in severe underutilization of compute and data movement resources in compute circuitry to perform FHE 100.

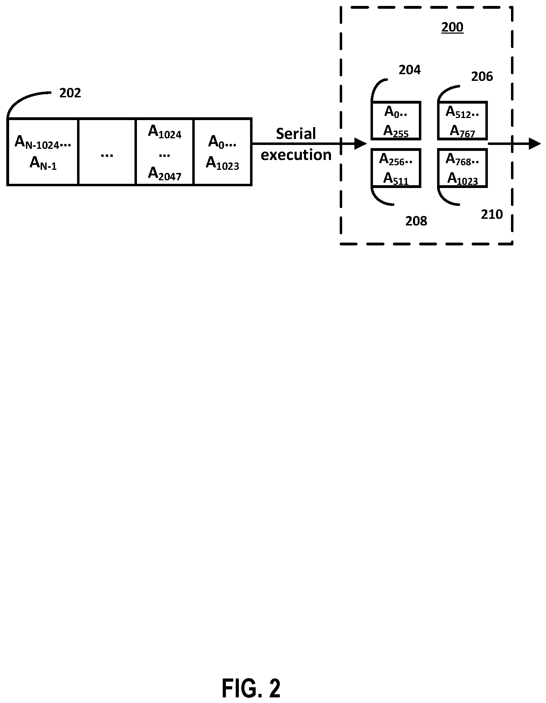

FIG. 2 illustrates a block diagram of an FHE accelerator 200 that is optimized for 1024 (1K) coefficient polynomials. Larger polynomials are broken into chunks based on the number of compute elements, and the chunks are processed serially by the FHE accelerator 200 that is optimized for 1024 (1K) coefficient polynomials. For example, the FHE accelerator to execute 1024 coefficient polynomials can execute larger polynomials such as 16K polynomials by breaking a 16K polynomial into 16x1K coefficient blocks. The 16x1K blocks are streamed serially into the FHE accelerator 200, which produces 16x1K output blocks. Reducing the number of compute elements in the FHE accelerator 200 results in a significant impact on Number-Theoretic-Transforms (NTT) /inverse-NTT (iNTT) performance when large polynomials are broken into chunks and serially executed in the FHE accelerator 200. This can impact the real-time latencies of workload/programs executed in the FHE accelerator 200.

A reconfigurable FHE accelerator enables a full utilization of compute resources and data movement resources by mapping multiple independent N* 1024polynomials (polynomials with degree N* 1024) on to a (M*N)* 1024 polynomial (polynomial with degree (M*N)* 1024 that is the largest degree supported by the FHE accelerator). To counteract the shuffling of the coefficients during Number-Theoretic-Transforms (NTT) and inverse-NTT operations, compute elements (also referred to a butterfly compute elements or "butterfly") in compute circuitry operate in a bypass mode enabled by a new data movement instruction to convert from the shuffled form of the coefficients to contiguous form without modifying the values of the coefficients.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

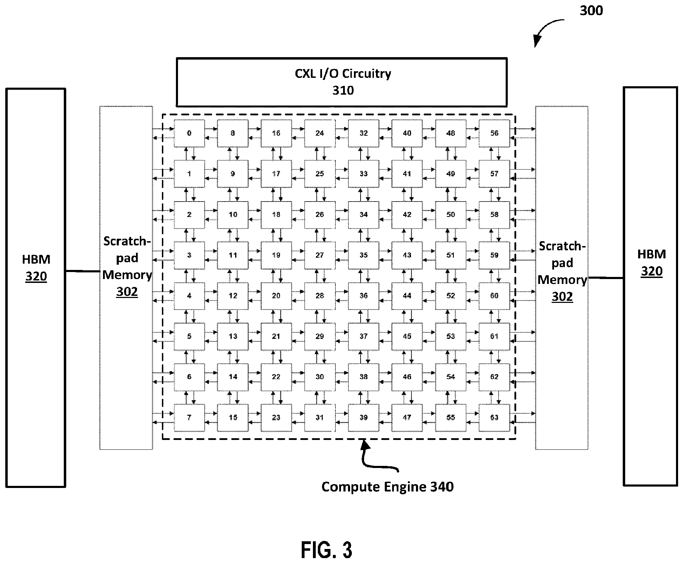

FIG. 3 illustrates an example system 300. In some examples, system 300 can be included in and/or operate within a compute platform. The compute platform, for example, could be located in a data center included in, for example, cloud computing infrastructure, examples are not limited to system 300 included in a compute platform located in a data center. As shown in FIG. 3, system 300 includes compute express link (CXL) input/output (I/O) circuitry 310, high bandwidth memory (HBM) 320, scratch pad memory 302 and tile array in a compute engine 340 (also referred to as a tile array).

In some examples, system 300 can be configured as a parallel processing device or accelerator to perform NTT/iNTT operations/computations for accelerating FHE workloads. For these examples, CXL I/O circuitry 310 can be configured to couple with one or more host central processing units (CPUs - not shown) to receive instructions and/or data via circuitry designed to operate in compliance with one or more CXL specifications published by the CXL Consortium to included, but not limited to, CXL Specification, Rev. 2.0, Ver. 1.0, published October 26, 2020, or CXL Specification, Rev. 3.0, Ver. 1.0, published August 1, 2022. Also, CXL I/O circuitry 310 can be configured to enable one or more host CPUs to obtain data associated with execution of accelerated FHE workloads by compute elements included in interconnected tiles of the compute engine 340. For example, data (for example, ciphertext or processed ciphertext) may be moved to or moved from HBM 320 and CXL I/O circuitry 310 can facilitate the data movement into or out of HBM 320 as part of execution of accelerated FHE workloads. Also, scratch pad memory 302 can be a type of memory (for example, register files) that can be proportionately allocated to tiles included in tile array in compute engine 340 to facilitate execution of the accelerated FHE workloads and to perform NTT/iNTT operations.

In some examples, as described in more detail below, tile array in compute engine 340 can be arranged in an 8X8 tile configuration as shown in FIG. 3 that includes tiles 0 to 63. For these examples, each tile can include, but is not limited to, 128 compute elements (not shown in FIG. 3). Also, as described in more detail later, the 128 compute elements can be 128 separately reconfigurable butterfly circuits, that are configured to compute output terms associated with polynomial coefficients for NTT/iNTT operations/computations. As shown in FIG. 3, tiles 0 to 63 can be interconnected via point-to-point connections via a 2-dimensional (2D) mesh interconnect-based architecture. The 2D mesh enables communications between adjacent tiles using single-hop links. Tiles included in tile array in compute engine 340 can be augmented with router circuitry that can route data received via inputs or sent via outputs across all 4 directions.

Examples are not limited to use of CXL I/O circuitry such as CXL I/O circuitry 310 to facilitate receiving instructions and/or data or providing executed results associated with FHE workloads. Other types of I/O circuitry and/or additional circuitry to receive instructions and/or data or provide executed results are contemplated.

Examples are not limited to HBM such as HBM 320 for receiving data to be processed (memory to store the data to be processed) or to store information associated with instructions to execute an FHE workload or execution results of the FHE workload. Other types of volatile memory or non-volatile memory are contemplated for use in system 300. Other types of volatile memory can include, but are not limited to, Dynamic RAM (DRAM), DDR synchronous dynamic RAM (DDR SDRAM), GDDR, static random-access memory (SRAM), thyristor RAM (T-RAM) or zero-capacitor RAM (Z-RAM). Non-volatile types of memory can include byte or block addressable types of non-volatile memory such as, but not limited to, multi-threshold level NAND flash memory, NOR flash memory, single or multi-level phase change memory (PCM), resistive memory, nanowire memory, ferroelectric transistor random access memory (FeTRAM), anti-ferroelectric memory, resistive memory including a metal oxide base, an oxygen vacancy base and a conductive bridge random access memory (CB-RAM), a spintronic magnetic junction memory, a magnetic tunneling junction (MTJ) memory, a domain wall (DW) and spin orbit transfer (SOT) memory, a thyristor based memory, a magnetoresistive random access memory (MRAM) that incorporates memristor technology, spin transfer torque MRAM (STT-MRAM), or a combination of any of the above.

According to some examples, system 300 can be included in a system-on-a-chip (SoC). SoC is a term often used to describe a device or system having a compute elements and associated circuitry (e.g., I/O circuitry, butterfly circuits, power delivery circuitry, memory controller circuitry, memory circuitry, etc.) integrated monolithically into a single integrated circuit ("IC") die, or chip. For example, a device, computing platform or computing system could have one or more compute elements (for example, butterfly circuits) and associated circuitry (for example, I/O circuitry, power delivery circuitry, memory controller circuitry, memory circuitry, etc.) arranged in a disaggregated collection of discrete dies, tiles and/or chiplets (e.g., one or more discrete compute die arranged adjacent to one or more other die such as memory die, I/O die, etc.). In such disaggregated devices and systems the various dies, tiles and/or chiplets could be physically and electrically coupled together by a package structure including, for example, various packaging substrates, interposers, interconnect bridges and the like. Also, these disaggregated devices can be referred to as a system-on-a-package (SoP).

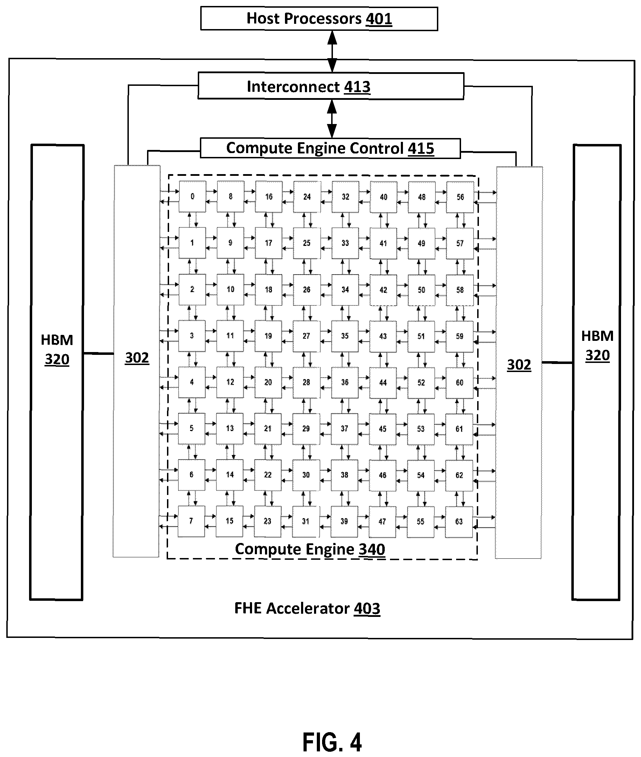

FIG. 4 illustrates an example of a FHE accelerator 403. As shown, the FHE accelerator 403 couples to one or more host processors 401 such as one or more central processing unit (CPU) cores via one or more interconnects 413.

The one or more interconnects 413 coupled to scratch pad memory 302 which handles load/stores of data and provides data for execution by the compute engine 340 comprising a plurality of tiles 409. In some examples, the tiles 409 are coupled to memory, the interconnect 413, and/or a compute engine control block 415.

The scratch pad memory 302 is coupled to high bandwidth memory (HBM) 320 which stores a larger amount of data. In some examples, the data is distributed across HBM 320 and banks of scratch pad memory 302. In some examples, HBM is external to the FHE accelerator 403. In some examples, some HBM is external to the FHE accelerator 403 and some HBM is internal to the FHE accelerator 403.

In some examples, a compute engine control block 415 dispatches instructions and handles synchronization of data from the HBM 320 and scratch pad memory 302 for the compute engine 340. In some examples, memory loads and stores are tracked in the compute engine control block 415 and dispatched across the scratch pad memory 302 for coordinated data fetch. These loads and stores are handled locally in the scratch pad memory 302 and written into the scratch pad memory 302 and/or HBM 320. In some examples, the compute engine control block 415 includes an instruction decoder to decode the instructions detailed herein. In some examples, a decoder of a host processor 401 decodes the instructions to be executed by the compute engine 340.

In some examples, the basic organization of the FHE compute engine 340 is a wide and flexible array of functional units organized in a butterfly configuration. The array of butterfly units is tightly coupled with a register file capable of storing one or more of FHE operands (e.g., entire input and output ciphertexts), twiddle factor constants, relevant public key material, etc. In some examples, the FHE operands, twiddle factors, key information, etc. are stored as polynomial coefficients.

The FHE compute engine 340 performs polynomial multiplication, addition, modulo reduction, etc. Given $a_i$ and $b_i$ in $\mathcal{R}_q$, two polynomials a(x) and b(x) over the ring can be expressed as

$$a(x) = a_0 + a_1 x + a_2 x^2 + \cdots a_{n-1} x^{n-1}$$

$$b(x) = b_0 + b_1 x + b_2 x^2 + \cdots b_{n-1} x^{n-1}$$

In some examples, an initial configuration of the array with respect to the register file allows full reuse of the register file while processing Ring-LWE polynomials with degree up to N = 16,384 and log q = 512-bit long coefficients; and partial reuse beyond such parameters, for which processing ciphertexts will require data movement from and to the upper levels in the memory hierarchy.

In some examples, the FHE compute engine 340 is composed of 512-bit Large Arithmetic Word Size (LAWS) units organized as vectored butterfly data paths. The butterfly units (LAWS or not) are designed to natively support operations on operands in either their positional form or leveraging Chinese Remainder Theorem (CRT) representation. In some examples, a double-CRT representation is used. The first CRT layer uses the Residue Number System (RNS) to decompose a polynomial into a tuple of polynomials with smaller moduli. The second layer converts each of small polynomials into a vector of modulo integers via NTT. In the double-CRT representation, an arbitrary polynomial is identified with a matrix consisting of small integers, and this enables an efficient polynomial arithmetic by performing component-wise modulo operations. The RNS decomposition offers the dual promise of increased performance using Single Instruction/Multiple Data (SIMD) operations along with a quadratic reduction in area with decreasing operand widths.

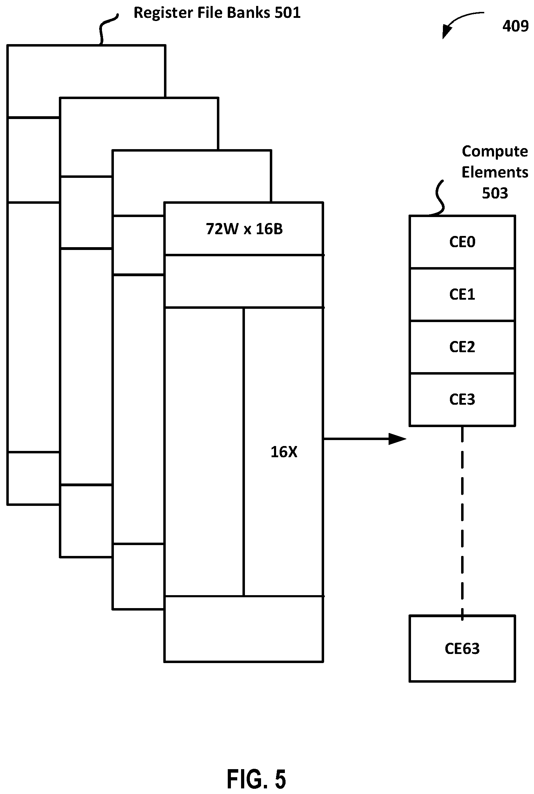

FIG. 5 illustrates examples of a FHE compute engine tile. In some examples, this is an illustration of FHE compute engine tile 409.

As illustrated, where each FHE compute engine tile 409 is composed of a subset of the register file (shown as a plurality of register file banks 501) are coupled with compute elements 503 (e.g. 64 such elements in this illustration allow different numbers of register file banks and compute elements may be used in some examples). In some examples, each compute element consumes up to 3 input operands and produces 2 output operands each cycle.

In some examples, the register file subset is organized into 4 banks of 18KB each with each memory bank comprising 16 physical memory modules of 72 words depth with 128-bit 1-read/1-write ports. The 1-read/1-write ported register file banks 501 feed each compute element with 'a', 'b,' ''c,; and/or 'ω' inputs. With the two outputs (a+ω*b and a-ω*b) written to any of the four register file banks simultaneously for NTT or iNTT.

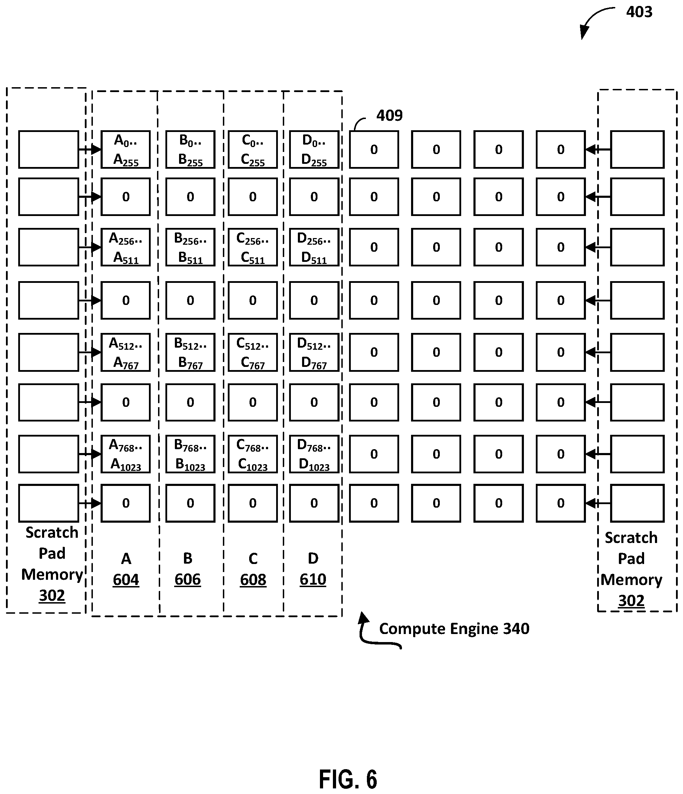

FIG. 6 is a block diagram of the FHE accelerator 403 to perform FHE computations on multiple independent N*1024 polynomials mapped onto a (M*N)* 1024 polynomial. The FHE accelerator 403 includes the scratch pad memory 302 and tile array in compute engine 340 in system 300.

In the example shown in FIG. 6, N is 1 and M is 16. Multiple smaller polynomials (1K) are mapped (also referred to as packed) on to a large (degree 16K) polynomial. Four 1K polynomials (labeled A, B, C, and D) are mapped on to a polynomial of degree 16K. The mapping of NK polynomials (polynomials with degree N* 1024) on to a (M*N*1024 polynomial (polynomial with degree (M*N)*1024 that is the largest degree supported by the FHE accelerator) is scalable and in the example shown in FIG. 6, up to 16x1K (16 polynomials of degree 1K) polynomials can be packed on to the single polynomial of degree 16K. The coefficients of the four 1K polynomials (labeled A, B, C and D) of degree 1K are distributed in a contiguous fashion to facilitate memory accesses as required by the NTT operation.

The FHE accelerator 403 has a scratch pad memory 302 and a tile array in compute engine 340 with 64 tiles organized in an array with 8 rows and 8 columns. Each tile 409 has 128 compute elements. The array of 64 tiles provides 8192 (8K) compute elements to perform polynomial operations on polynomials of 16K degree. Four polynomials of 1K degree (labeled A, B, C and D) are stored in tiles in columns 604, 606, 608, 610 in the tile array in compute engine 340.

Column 604 stores a 1K polynomial (A with coefficients $A_0 \ldots A_{1023}$) that uses 512 compute elements in four tiles in odd rows (with coefficients $A_0 \ldots A_{255}$ stored in row 1, coefficients $A_{256} \ldots A_{511}$ stored in row 3, coefficients $A_{512} \ldots A_{767}$ stored in row 5, and coefficients $A_{768} \ldots A_{1023}$ stored in row 7.

Column 606 stores a 1K polynomial (B with coefficients $B_0 \ldots B_{1023}$) that uses 512 compute elements in four tiles in odd rows (with coefficients $B_0 \ldots B_{255}$ stored in row 1, coefficients $B_{256} \ldots B_{511}$ stored in row 3, coefficients $B_{512} \ldots B_{767}$ stored in row 5, and coefficients $B_{768} \ldots B_{1023}$ stored in row 7.

Column 608 stores a 1K polynomial (C with coefficients $C_0 \ldots C_{1023}$) that uses 512 compute elements in four tiles in odd rows (with coefficients $C_0 \ldots C_{255}$ stored in row 1, coefficients $C_{256} \ldots C_{511}$ stored in row 3, coefficients $C_{512} \ldots C_{767}$ stored in row 5, and coefficients $C_{768} \ldots C_{1023}$ stored in row 7.

Column 610 stores a 1K polynomial (D with coefficients $D_0 \ldots D_{1023}$) that uses 512 compute elements in four tiles in odd rows (with coefficients $D_0 \ldots D_{255}$ stored in row 1, coefficients $D_{256} \ldots D_{511}$ stored in row 3, coefficients $D_{512} \ldots D_{767}$ stored in row 5, and coefficients $D_{768} \ldots D_{1023}$ stored in row 7.

In an example in which there are 16 1K polynomials (polynomials of degree 1K) stored in the array of 64 tiles, the FHE accelerator 403 to perform a Single Instruction/Multiple Data (SIMD) execution on all of the 16 polynomials of degree 1K simultaneously, thereby utilizing of the available compute resources in the FHE accelerator 403. The FHE accelerator 403 performs operations such as add, multiply, multiply-and-accumulate that do not involve any data movement across the polynomial coefficients. The FHE accelerator 403 also performs NTT and iNTT operations that involve a fixed permutation of the coefficients as implemented by a constant geometry NTT/iNTT network. NTT is an FHE operation used to convert polynomial ring operands to their Chinese remainder theorem (CRT) counterparts, that simplifies a polynomial multiplication from $O(n^2)$ down to $O(n\log n)$ multiplications, where n is the degree of polynomial.

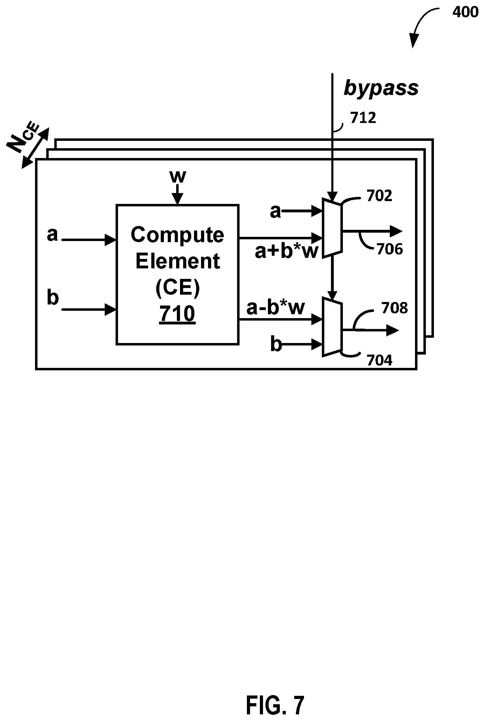

FIG. 7 is a block diagram illustrating a compute element 710 with a configurable output data bypass mode in a tile in the tile array in compute engine 340 in the FHE accelerator 403. The number of compute elements 710 in compute engine 340 is represented as $N_{CE}$. The degree of the polynomial is N (for example 1K or 16K). As the degree of polynomials mapped on the compute engine 340 is fixed during runtime, the degree value is streamed into the compute engine 340 as metadata prior to the execution of a workload.

The compute element 710 is configured to perform NTT or iNTT to generate a+ω*b and a-ω*b.

The values of a, b, and ω may be of any size such as 32-bit, 512-bit, etc. Typically, the values of a, b, and are integers. NTT and iNTT are critical operations for accelerating FHE workloads. NTT/iNTT converts polynomial ring operands into their Chinese Remainder Theorem (CRT) representation, thereby speeding up polynomial multiplication operations from $O(n^2)$ to $O(n\log n)$. A reconfigurable fully homomorphic encryption accelerator to configure the plurality of compute elements to operate in a bypass mode in response to a received polynomial iNTT data movement instruction.

There are two inputs to the compute element 710, a first input is a and a second input is b. The outputs of the compute element 710 are a+b*w and a-b*w, where a and b correspond to the polynomial input coefficients for NTT/iNTT operations and w corresponds to the twiddle factor. There are two 2:1 multiplexers 702, 702. Multiplexer 702 receives two inputs (a+b*w, a) and multiplexer 704 receives two inputs (a-b*w, b). Multiplexer 702 to select between the two inputs (a+b*w, a). Multiplexer 704 to select between the two inputs (a-b*w, a). The state of a bypass signal 712 selects one of the two inputs received by multiplexer 702 to be provided on the output port 706 of the compute element 710. The state of the bypass signal 712 selects one of the two inputs received by multiplexer 704 to be provided on the output port 708 of the compute element 710 when configured in bypass mode.

When the degree of the polynomial (N) is greater than the number of compute elements 710 in the compute engine 340 ($N_{CE}$). For example, N is 16K and $N_{CE}$ is 8K, the compute elements 710 operate in normal NTT mode and iNTT mode to process the input polynomials, resulting in the generation of the outputs a+b*w and a-b*w, where a and b correspond to the polynomial input coefficients for NTT/iNTT operations and w corresponds to the twiddle factor. The state of bypass signal 712 selects a+b*w received by multiplexer 702 to be provided on the output port 706 of the compute element 710. The state of the bypass signal 712 selects a-b*w received by multiplexer 704 to be provided on the output port 708 of the compute element 710.

When the degree of the polynomial (N) is less than the number of compute elements 710 in the compute engine 340 ($N_{CE}$). For example, N is 1K and $N_{CE}$ is 8K, the compute elements 710 operate in iNTT data movement with data bypass mode to rearrange the coefficients. During the bypass mode, the compute engine 340 provides the input coefficients a and b on the output ports 706, 708, without performing compute on the input coefficients a and b. The state of bypass signal 712 selects 'a' received by multiplexer 702 to be provided on the output port 706 of the compute element 710. The state of the bypass signal 712 selects 'b' received by multiplexer 704 to be provided on the output port 708 of the compute element 710. In bypass mode, the compute elements 710 converts the word-interleaved form of the output coefficients to contiguous form without modifying the values of the output coefficients.

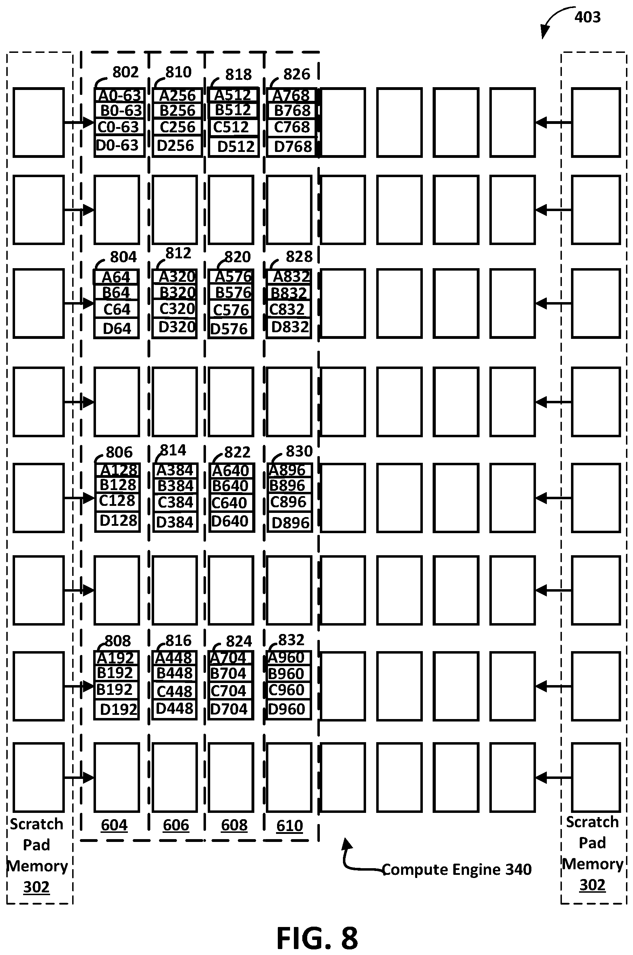

FIG. 8 is a block diagram of FHE accelerator 403 to perform computations on multiple independent $N^*$ 1024 polynomials mapped onto a $(M^*N)^*1024$ polynomial illustrating the distribution of output coefficients of the four 1K polynomials shown in FIG. 6 after an NTT operation has been performed on the four 1K polynomials.

FIG. 8 will be described in conjunction with FIG. 6 and FIG. 7.

When an NTT operation is performed on the multiple independent $N^*$ 1024 polynomials mapped onto $(M^*N)^*1024$ polynomial shown in FIG. 6, the constant geometry network shuffles the outputs from the compute elements 710 (a+b*w, a-b*w,) in tiles in columns 604, 606, 608, 610 such that the output coefficients are converted into a word-interleaved form as shown in FIG. 8. Word-interleaved form is where coefficients of multiple independent polynomials are interleaved within a same memory block.

The output coefficients of the four IK polynomials labeled A, B, C and D are distributed such that tiles in columns 604, 606, 608, 610 contain a subset of the output coefficients (64 coefficients of each 1K polynomial per tile) from all the 1K polynomials.

Column 604 stores output coefficients (0-255) of the four IK polynomials labeled A, B, C and D in tiles 802, 804, 806, 808. Tile 802 stores output coefficients 0-63 for polynomials labeled A, B, C and D. Tile 804 stores output coefficients 64-127 for polynomials labeled A, B, C and D. Tile 806 stores output coefficients 128-191 for polynomials labeled A, B, C and D. Tile 808 stores output coefficients 192-255 for polynomials labeled A, B, C and D.

Column 606 stores output coefficients (256-511) of the four IK polynomials labeled A, B, C and D in tiles 810, 812, 814, 816. Tile 810 stores output coefficients 256-319 for polynomials labeled A, B, C and D. Tile 812 stores output coefficients 320-383 for polynomials labeled A, B, C and D. Tile 814 stores output coefficients 384-447 for polynomials labeled A, B, C and D. Tile 816 stores output coefficients 448-767 for polynomials labeled A, B, C and D.

Column 608 stores output coefficients (512-767) of the four IK polynomials labeled A, B, C and D in tiles 818, 820, 822, 824. Tile 818 stores output coefficients 512-575 for polynomials labeled A, B, C and D. Tile 820 stores output coefficients 576-639 for polynomials labeled A, B, C and D. Tile 822 stores output coefficients 640-703 for polynomials labeled A, B, C and D. Tile 824 stores output coefficients 704-767 for polynomials labeled A, B, C and D.

Column 610 stores output coefficients (768-1023) of the four IK polynomials labeled A, B, C and D in tiles 826, 828, 830, 832. Tile 826 stores output coefficients 768-831 for polynomials labeled A, B, C and D. Tile 828 stores output coefficients 832-895 for polynomials labeled A, B, C and D. Tile 830 stores output coefficients 896-959 for polynomials labeled A, B, C and D. Tile 832 stores output coefficients 960-1023 for polynomials labeled A, B, C and D.

When a single large polynomial is mapped on to the FHE compute engine, there are no interactions across the coefficients distributed within a tile for SIMD operations on FHE compute engines. However, when multiple smaller polynomials are packed into a large polynomial, interaction across the coefficients distributed within a tile are required by FHE operations (for example, addition/multiplication on a subset of polynomials).

Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

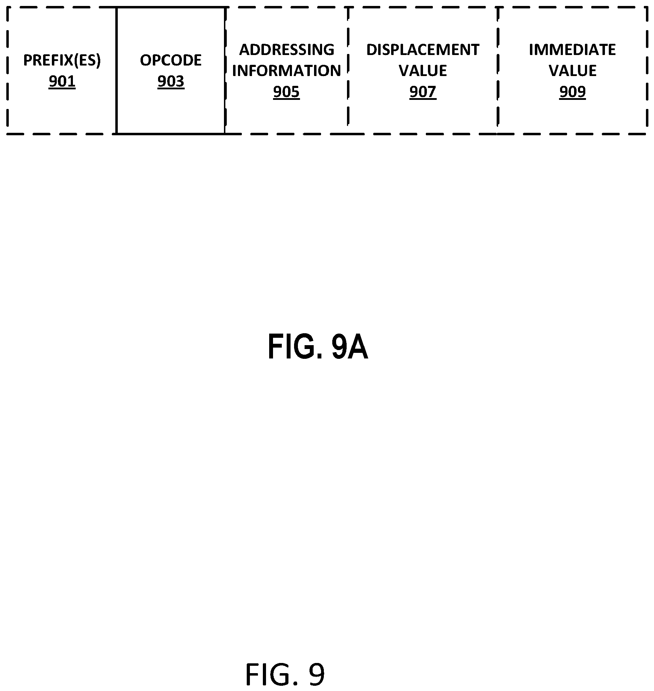

FIG. 9A illustrates examples of an instruction format. As illustrated, an instruction may include multiple components including, but not limited to, one or more fields for: one or more prefixes 901, an opcode 903, addressing information 905 (e.g., register identifiers, memory addressing information, etc.), a displacement value 907, and/or an immediate value 909. Note that some instructions utilize some or all the fields of the format whereas others may only use the field for the opcode 903. In some examples, the order illustrated is the order in which these fields are to be encoded, however, it should be appreciated that in other examples these fields may be encoded in a different order, combined, etc.

The prefix(es) field(s) 901, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 903 is used to at least partially define the operation to be performed upon a decoding of the instruction. In some examples, a primary opcode encoded in the opcode field 903 is one, two, or three bytes in length. In other examples, a primary opcode can be a different length. An additional 3-bit opcode field is sometimes encoded in another field.

The addressing information field 905 is used to address one or more operands of the instruction, such as a location in memory or one or more registers.

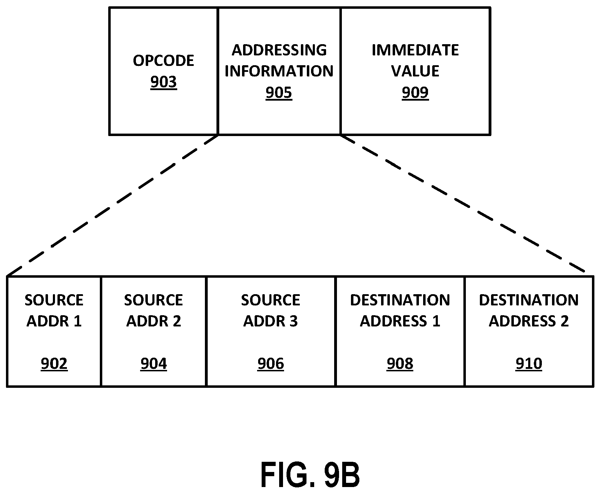

FIG. 9B illustrates a polynomial iNTT data movement instruction to convert the word-interleaved coefficients shown in FIG. 6 to contiguous form. Contiguous form is where coefficients of the same polynomial are in a same memory block.

The instruction format is (opcode, src _address1, src_address2, src_address3, dst_address1, dst_address2, metadata). The opcode field 903 is used to define the operation (iNTT data movement) to be performed upon a decoding of the instruction. The addressing information field 905 is used to address the operands of the iNTT data movement instruction. The operands include one or more fields (source address 1 902, source address 2 904, source address3 906) to indicate a memory source location, and one or more fields (destination address 1 908 and destination address 2 910) to indicate a destination (for example, scratchpad, HBM, register file, etc.) for the data being moved. The immediate value field 909 stores metadata (for example, the degree of the polynomial). As the degree of polynomials mapped on compute engine is fixed during runtime, the degree value is streamed in as a metadata prior to the execution of a workload. In other embodiments, the instruction to perform iNTT data movement may have fewer or more operands than what is shown in Fig. 9B.

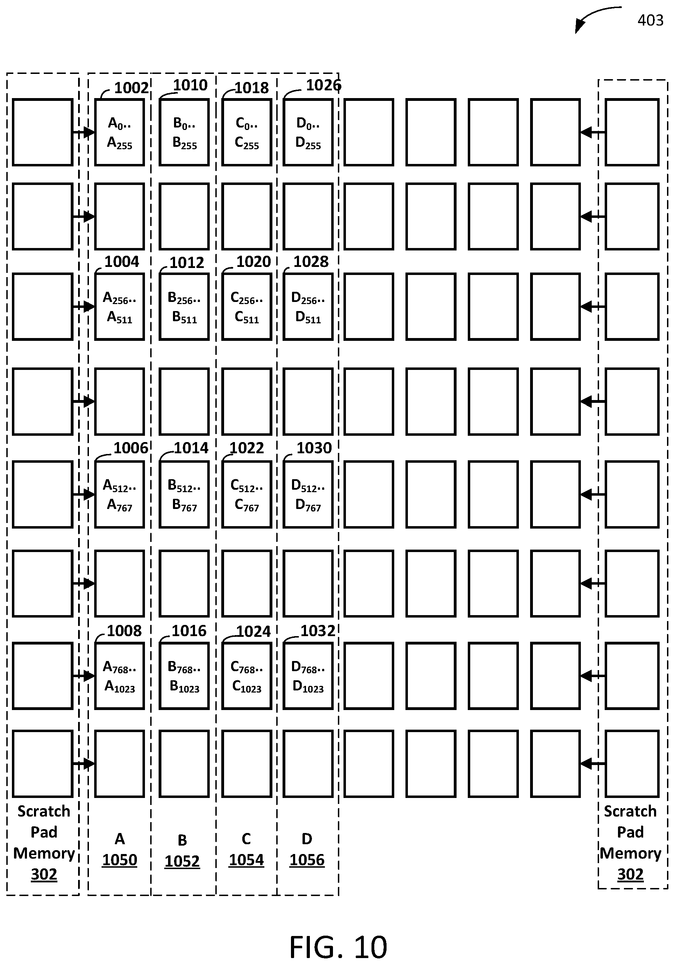

FIG. 10 is a block diagram of the FHE accelerator 403 to perform computations on multiple independent N* 1024 polynomials mapped onto a (M*N)*1024 polynomial after conversion of the word-interleaved coefficients shown in FIG. 8 to contiguous form performed by the iNTT data movement instruction.

The output coefficients of the four IK polynomials labeled A, B, C and D are distributed such that tiles in each of the columns 1050, 1052, 1054, 1056 contain a subset of the output coefficients (256 coefficients of the 1K polynomial per tile) from one of the 1K polynomials.

Column 1050 stores output coefficients (0-1024) of the IK polynomial labeled A in tiles 1002, 1004, 1006, 1008. Tile 1002 stores output coefficients 0-63 for of the IK polynomial labeled A. Tile 1004 stores output coefficients 64-127 for the 1K polynomial labeled A. Tile 1006 stores output coefficients 128-191 for the polynomial labeled A. Tile 1008 stores output coefficients 192-255 for the polynomial labeled A.

Column 1052 stores output coefficients (0-1024) of the IK polynomial labeled B in tiles 1010, 1012, 1014, 1016. Tile 1010 stores output coefficients 0-63 for of the IK polynomial labeled B. Tile 1012 stores output coefficients 64-127 for the 1K polynomial labeled B. Tile 1014 stores output coefficients 128-191 for the polynomial labeled B. Tile 1016 stores output coefficients 192-255 for the polynomial labeled B.

Column 1054 stores output coefficients (0-1024) of the IK polynomial labeled C in tiles 1018, 1020, 1022, 1024. Tile 1018 stores output coefficients 0-63 for of the IK polynomial labeled C. Tile 1020 stores output coefficients 64-127 for the 1K polynomial labeled C. Tile 1022 stores output coefficients 128-191 for the polynomial labeled C. Tile 1024 stores output coefficients 192-255 for the polynomial labeled C.

Column 1056 stores output coefficients (0-1024) of the IK polynomial labeled D in tiles 1026, 1028, 1030, 1032. Tile 1026 stores output coefficients 0-63 for of the IK polynomial labeled D. Tile 1028 stores output coefficients 64-127 for the 1K polynomial labeled D. Tile 1030 stores output coefficients 128-191 for the polynomial labeled A. Tile 1032 stores output coefficients 192-255 for the polynomial labeled D.

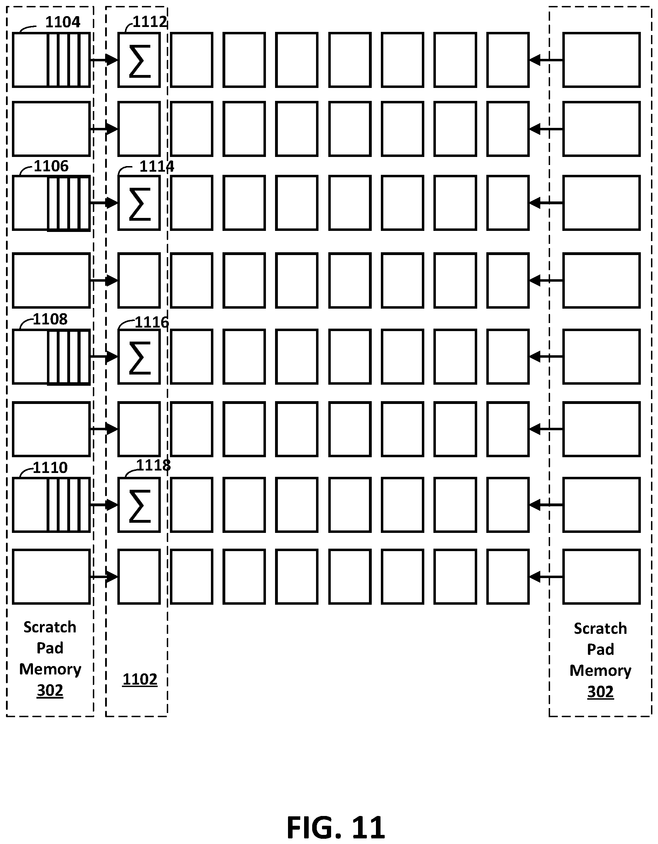

FIG. 11 illustrates the use of scratch pad memory 302 to store coefficients after conversion of the word-interleaved coefficients shown in FIG. 8 to contiguous form as shown in FIG. 10.

After the coefficients are arranged in contiguous form, the polynomials of degree 1K can interact with each other by streaming the coefficients to scratch pad memory 302 and bringing the coefficients back to the compute engine to perform operations ($\Sigma$) on a subset of the coefficients (for example, modular addition, modular multiplication or modular multiply-accumulate) on a subset of polynomials.

In the example shown in FIG. 11, subsets of coefficients 1104, 1106, 1108, 1110 are stored in scratch pad memory 302. Tiles 1112, 1114, 1116, 1108 in column 1102 of the tile array perform operations on the subsets of coefficients 1104, 1106, 1108, 1110. Tile 1112 performs operations on subset of coefficients 1104. Tile 1114 performs operations on subset of coefficients 1106. Tile 1116 performs operations on subset of coefficients 1108. Tile 1118 performs operations on subset of coefficients 1110.

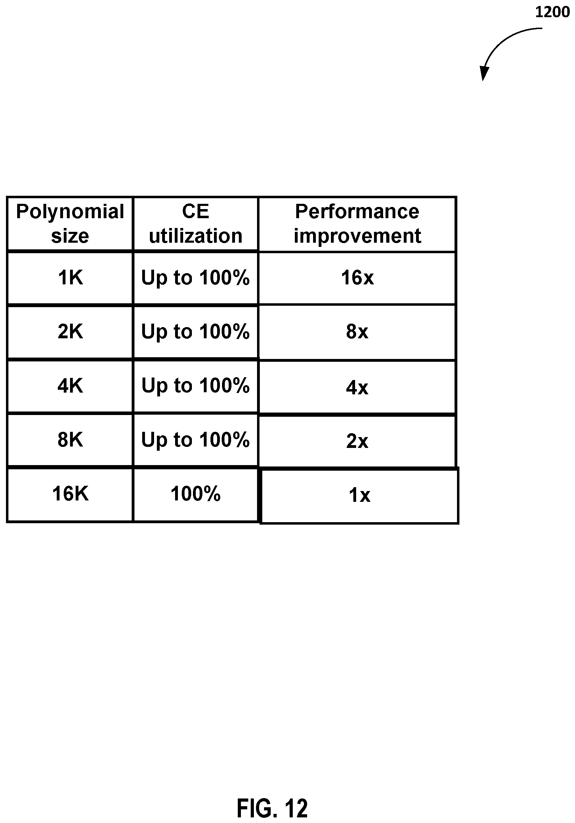

FIG. 12 is a table illustrating performance improvement for the FHE accelerator 403 to perform computations on multiple independent N*1024 polynomials mapped onto a compute engine for a (M*N)*1024 polynomial as described in conjunction with FIG. 6 and FIG. 7.

Table 1200 illustrates performance improvement compared to zero padding described in conjunction with FIG. 1. As shown in table 1200, there is a 16x performance improvement for 1K polynomials with up to 100% compute engine utilization, an 8x performance improvement for 2K polynomials with up to 100% compute engine utilization, a 4x performance improvement for 4K polynomials with up to 100% compute engine utilization and an 2x performance improvement for 8K polynomials with up to 100% compute engine utilization.

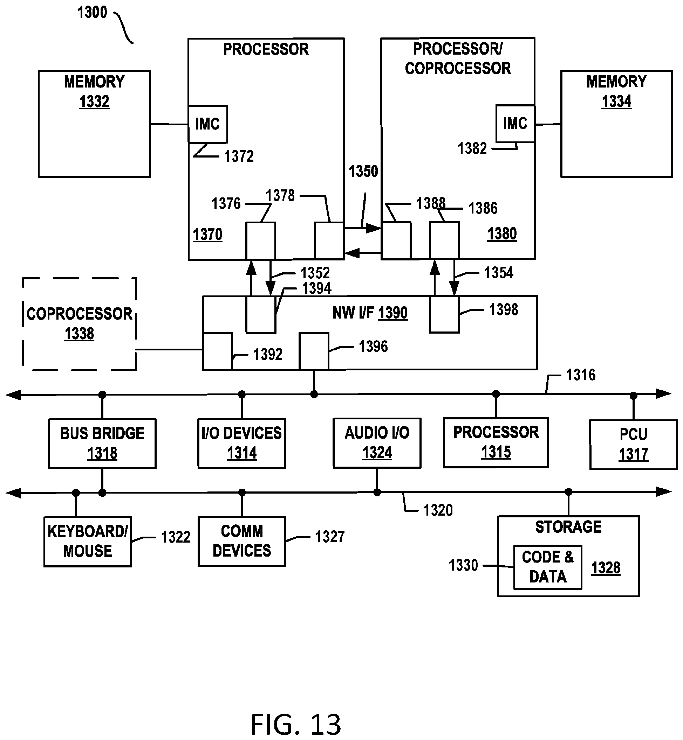

FIG. 13 illustrates an example computing system. Multiprocessor system 1300 is an interfaced system and includes a plurality of processors or cores including a first processor 1370 and a second processor 1380 coupled via an interface 1350 such as a point-to-point (P-P) interconnect, a fabric, and/or bus. In some examples, the first processor 1370 and the second processor 1380 are homogeneous. In some examples, first processor 1370 and the second processor 1380 are heterogenous. Though the example system 1300 is shown to have two processors, the system may have three or more processors, or may be a single processor system. In some examples, the computing system is a system on a chip (SoC).

Processors 1370 and 1380 are shown including integrated memory controller (IMC) circuitry 1372 and 1382, respectively. Processor 1370 also includes interface circuits 1376 and 1378; similarly, second processor 1380 includes interface circuits 1386 and 1388. Processors 1370, 1380 may exchange information via the interface 1350 using interface circuits 1378, 1388. IMCs 1372 and 1382 couple the processors 1370, 1380 to respective memories, namely a memory 1332 and a memory 1334, which may be portions of main memory (system memory) locally attached to the respective processors. The memory 1332 and memory 1334 to store instructions and data.

Processors 1370, 1380 may each exchange information with a network interface (NW I/F) 1390 via individual interfaces 1352, 1354 using interface circuits 1376, 1394, 1386, 1398. The network interface 1390 (e.g., one or more of an interconnect, bus, and/or fabric, and in some examples is a chipset) may optionally exchange information with a co-processor 1338 via an interface circuit 1392. In some examples, the co-processor 1338 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 1370, 1380 or outside of both processors, yet connected with the processors via an interface such as a point to point (P-P) interconnect, such that either or both processors' local cache information may be stored in the shared cache if a processor is placed into a low power mode.

Network interface 1390 may be coupled to a first interface 1316 via interface circuit 1396. In some examples, first interface 1316 may be an interface such as a Peripheral Component Interconnect (PCI) interconnect, a PCI Express interconnect or another I/O interconnect. In some examples, first interface 1316 is coupled to a power control unit (PCU) 1317, which may include circuitry, software, and/or firmware to perform power management operations with regard to the processors 1370, 1380 and/or co-processor 1338. PCU 1317 provides control information to a voltage regulator (not shown) to cause the voltage regulator to generate the appropriate regulated voltage. PCU 1317 also provides control information to control the operating voltage generated. In various examples, PCU 1317 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1317 is illustrated as being present as logic separate from the processor 1370 and/or processor 1380. In other cases, PCU 1317 may execute on a given one or more of cores (not shown) of processor 1370 or 1380. In some cases, PCU 1317 may be implemented as a microcontroller (dedicated or general-purpose) or other control logic configured to execute its own dedicated power management code, sometimes referred to as P-code. In yet other examples, power management operations to be performed by PCU 1317 may be implemented externally to a processor, such as by way of a separate power management integrated circuit (PMIC) or another component external to the processor. In yet other examples, power management operations to be performed by PCU 1317 may be implemented within BIOS or other system software.

Various I/O devices 1314 may be coupled to first interface 1316, along with a bus bridge 1318 which couples first interface 1316 to a second interface 1320. In some examples, one or more additional processor(s) 1315, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 1316. In some examples, second interface 1320 may be a low pin count (LPC) interface. Various devices may be coupled to second interface 1320 including, for example, a keyboard and/or mouse 1322, communication devices 1327 and storage circuitry 1328. Storage circuitry 1328 may be one or more non-transitory machine-readable storage media as described below, such as a disk drive or other mass storage device which may include instructions/code and data 1330 and may implement the storage 'ISAB03 in some examples. Further, an audio I/O 1324 may be coupled to second interface 1320. Note that other architectures than the point-to-point architecture described above are possible. For example, instead of the point-to-point architecture, a system such as multiprocessor system 1300 may implement a multi-drop interface or other such architecture.

Example Core Architectures, Processors, and Computer Architectures.

Processor cores ("cores") may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality.

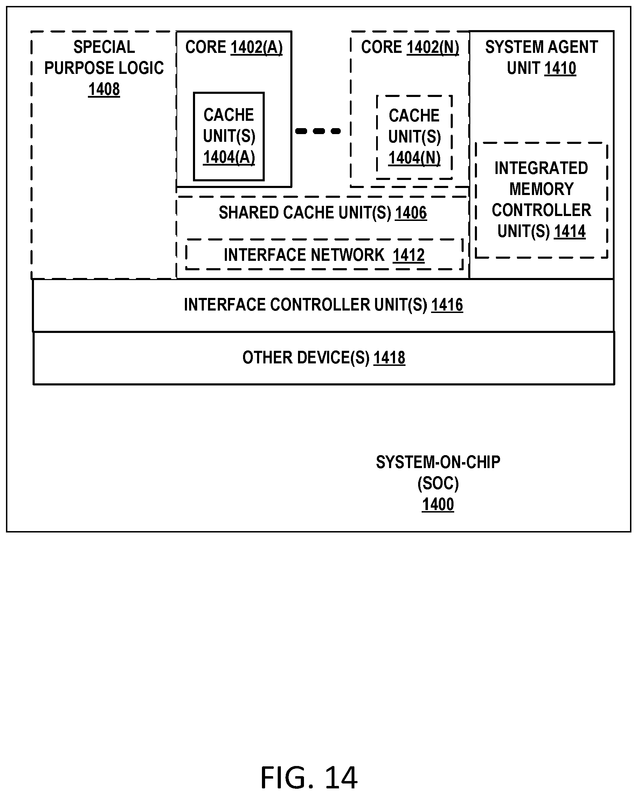

FIG. 14 illustrates a block diagram of an example SoC 1400 that may have one or more processor cores and an integrated memory controller. The SoC 1400 includes different components (hardware elements), also called "blocks" or subsystems.

The solid lined boxes illustrate an SoC 1400 with a single processor core 1402(A), system agent unit circuitry 1410, and a set of one or more interface controller unit(s) circuitry 1416, while the optional addition of the dashed lined boxes illustrates an alternative SoC 1400 with multiple cores 1402(A)-(N), a set of one or more integrated memory controller unit(s) circuitry 1414 in the system agent unit circuitry 1410, and special purpose logic 1408, as well as a set of one or more interface controller units circuitry 1416. Note that the SoC 1400 may be one of the processors 1370 or 1380, or co-processor 1338 or 1315 of FIG. 13.

Thus, different implementations of the SoC 1400 may include: 1) a CPU with the special purpose logic 1408 being integrated graphics and/or scientific (throughput) logic (which may include one or more cores, not shown), and the cores 1402(A)-(N) being one or more general purpose cores (e.g., general purpose in-order cores, general purpose out-of-order cores, or a combination of the two); 2) a coprocessor with the cores 1402(A)-(N) being a large number of special purpose cores intended primarily for graphics and/or scientific (throughput); and 3) a coprocessor with the cores 1402(A)-(N) being a large number of general purpose in-order cores. Thus, the SoC 1400 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The SoC 1400 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1404(A)-(N) within the cores 1402(A)-(N), a set of one or more shared cache unit(s) circuitry 1406, and external memory (not shown) coupled to the set of integrated memory controller unit(s) circuitry 1414. The set of one or more shared cache unit(s) circuitry 1406 may include one or more mid-level caches, such as level 2 (L2), level 3 (L3), level 4 (L4), or other levels of cache, such as a last level cache (LLC), and/or combinations thereof. While in some examples interface network circuitry 1412 (e.g., a ring interconnect) interfaces the special purpose logic 1408 (e.g., integrated graphics logic), the set of shared cache unit(s) circuitry 1406, and the system agent unit circuitry 1410, alternative examples use any number of well-known techniques for interfacing such units. In some examples, coherency is maintained between one or more of the shared cache unit(s) circuitry 1406 and cores 1402(A)-(N). In some examples, interface controller units circuitry 1416 couple the cores 1402 to one or more other devices 1418 such as one or more I/O devices, storage, one or more communication devices (e.g., wireless networking, wired networking, etc.), etc.

In some examples, one or more of the cores 1402(A)-(N) are capable of multi-threading. The system agent unit circuitry 1410 includes those components coordinating and operating cores 1402(A)-(N). The system agent unit circuitry 1410 may include, for example, power control unit (PCU) circuitry and/or display unit circuitry (not shown). The PCU may be or may include logic and components needed for regulating the power state of the cores 1402(A)-(N) and/or the special purpose logic 1408 (e.g., integrated graphics logic). The display unit circuitry is for driving one or more externally connected displays.

The cores 1402(A)-(N) may be homogenous in terms of instruction set architecture (ISA). Alternatively, the cores 1402(A)-(N) may be heterogeneous in terms of ISA; that is, a subset of the cores 1402(A)-(N) may be capable of executing an ISA, while other cores may be capable of executing only a subset of that ISA or another ISA.

Example Core Architectures - In-order and out-of-order core block diagram.

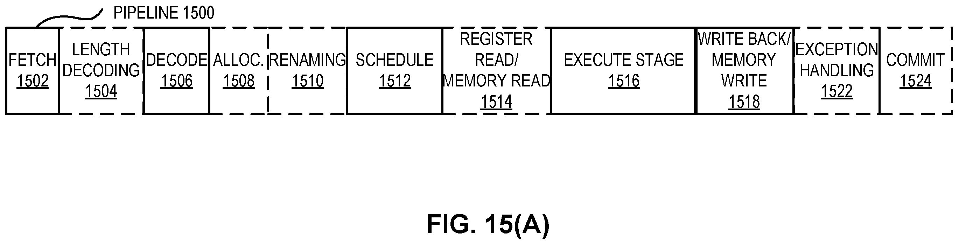

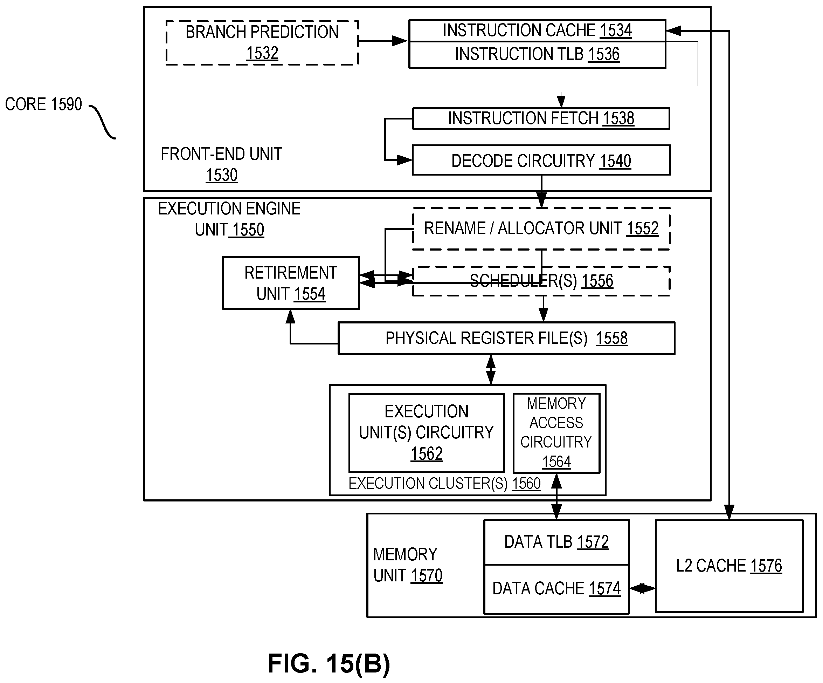

FIG. 15(A) is a block diagram illustrating both an example in-order pipeline and an example register renaming, out-of-order issue/execution pipeline according to examples. FIG. 15(B) is a block diagram illustrating both an example in-order architecture core and an example register renaming, out-of-order issue/execution architecture core to be included in a processor according to examples. The solid lined boxes in FIGS. 15(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 15(A), a processor pipeline 1500 includes a fetch stage 1502, an optional length decoding stage 1504, a decode stage 1506, an optional allocation (Alloc) stage 1508, an optional renaming stage 1510, a schedule (also known as a dispatch or issue) stage 1512, an optional register read/memory read stage 1514, an execute stage 1516, a write back/memory write stage 1518, an optional exception handling stage 1522, and an optional commit stage 1524. One or more operations can be performed in each of these processor pipeline stages. For example, during the fetch stage 1502, one or more instructions are fetched from instruction memory, and during the decode stage 1506, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1506 and the register read/memory read stage 1514 may be combined into one pipeline stage. In one example, during the execute stage 1516, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 15(B) may implement the pipeline 1500 as follows: 1) the instruction fetch circuitry 1538 performs the fetch and length decoding stages 1502 and 1504; 2) the decode circuitry 1540 performs the decode stage 1506; 3) the rename/allocator unit circuitry 1552 performs the allocation stage 1508 and renaming stage 1510; 4) the scheduler(s) circuitry 1556 performs the schedule stage 1512; 5) the physical register file(s) circuitry 1558 and the memory unit circuitry 1570 perform the register read/memory read stage 1514; the execution cluster(s) 1560 perform the execute stage 1516; 6) the memory unit circuitry 1570 and the physical register file(s) circuitry 1558 perform the write back/memory write stage 1518; 7) various circuitry may be involved in the exception handling stage 1522; and 8) the retirement unit circuitry 1554 and the physical register file(s) circuitry 1558 perform the commit stage 1524.

FIG. 15(B) shows a processor core 1590 including front-end unit circuitry 1530 coupled to execution engine unit circuitry 1550, and both are coupled to memory unit circuitry 1570. The core 1590 may be a reduced instruction set architecture computing (RISC) core, a complex instruction set architecture computing (CISC) core, a very long instruction word (VLIW) core, or a hybrid or alternative core type. As yet another option, the core 1590 may be a special-purpose core, such as, for example, a network or communication core, compression engine, coprocessor core, general purpose computing graphics processing unit (GPGPU) core, graphics core, or the like.

The front-end unit circuitry 1530 may include branch prediction circuitry 1532 coupled to instruction cache circuitry 1534, which is coupled to an instruction translation lookaside buffer (TLB) 1536, which is coupled to instruction fetch circuitry 1538, which is coupled to decode circuitry 1540. In one example, the instruction cache circuitry 1534 is included in the memory unit circuitry 1570 rather than the front-end circuitry 1530. The decode circuitry 1540 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1540 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1540 may be implemented using various different mechanisms. Examples of suitable mechanisms include, but are not limited to, look-up tables, hardware implementations, programmable logic arrays (PLAs), microcode read only memories (ROMs), etc. In one example, the core 1590 includes a microcode ROM (not shown) or other medium that stores microcode for certain macroinstructions (e.g., in decode circuitry 1540 or otherwise within the front-end circuitry 1530). In one example, the decode circuitry 1540 includes a micro-operation (micro-op) or operation cache (not shown) to hold/cache decoded operations, micro-tags, or micro-operations generated during the decode or other stages of the processor pipeline 1500. The decode circuitry 1540 may be coupled to rename/allocator unit circuitry 1552 in the execution engine circuitry 1550.

The execution engine circuitry 1550 includes the rename/allocator unit circuitry 1552 coupled to retirement unit circuitry 1554 and a set of one or more scheduler(s) circuitry 1556. The scheduler(s) circuitry 1556 represents any number of different schedulers, including reservations stations, central instruction window, etc. In some examples, the scheduler(s) circuitry 1556 can include arithmetic logic unit (ALU) scheduler/scheduling circuitry, ALU queues, address generation unit (AGU) scheduler/scheduling circuitry, AGU queues, etc. The scheduler(s) circuitry 1556 is coupled to the physical register file(s) circuitry 1558. Each of the physical register file(s) circuitry 1558 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1558 includes vector registers unit circuitry, writemask registers unit circuitry, and scalar register unit circuitry. These register units may provide architectural vector registers, vector mask registers, general-purpose registers, etc. The physical register file(s) circuitry 1558 is coupled to the retirement unit circuitry 1554 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1554 and the physical register file(s) circuitry 1558 are coupled to the execution cluster(s) 1560. The execution cluster(s) 1560 includes a set of one or more execution unit(s) circuitry 1562 and a set of one or more memory access circuitry 1564. The execution unit(s) circuitry 1562 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1556, physical register file(s) circuitry 1558, and execution cluster(s) 1560 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1564). It should also be understood that where separate pipelines are used, one or more of these pipelines may be out-of-order issue/execution and the rest in-order.

In some examples, the execution engine unit circuitry 1550 may perform load store unit (LSU) address/data pipelining to an Advanced Microcontroller Bus (AMB) interface (not shown), and address phase and writeback, data phase load, store, and branches.

The set of memory access circuitry 1564 is coupled to the memory unit circuitry 1570, which includes data TLB circuitry 1572 coupled to data cache circuitry 1574 coupled to level 2 (L2) cache circuitry 1576. In one example, the memory access circuitry 1564 may include load unit circuitry, store address unit circuitry, and store data unit circuitry, each of which is coupled to the data TLB circuitry 1572 in the memory unit circuitry 1570. The instruction cache circuitry 1534 is further coupled to the level 2 (L2) cache circuitry 1576 in the memory unit circuitry 1570. In one example, the instruction cache 1534 and the data cache 1574 are combined into a single instruction and data cache (not shown) in L2 cache circuitry 1576, level 3 (L3) cache circuitry (not shown), and/or main memory. The L2 cache circuitry 1576 is coupled to one or more other levels of cache and eventually to a main memory.

The core 1590 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1590 includes logic to support a packed data instruction set architecture extension (e.g., AVX1, AVX2), thereby allowing the operations used by many multimedia applications to be performed using packed data.

Example Execution Unit(s) Circuitry.

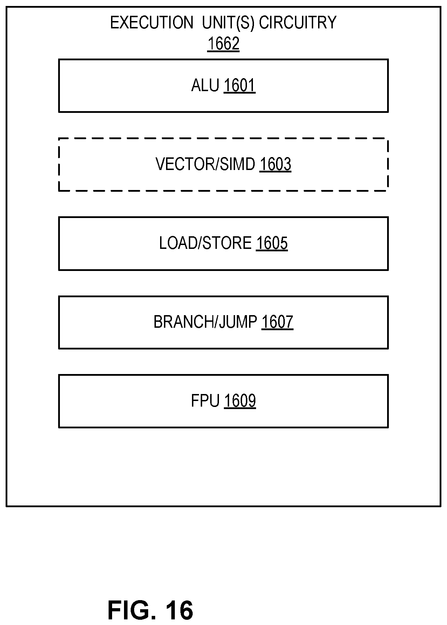

FIG. 16 illustrates examples of execution unit(s) circuitry, such as execution unit(s) circuitry 1562 of FIG. 15(B). As illustrated, execution unit(s) circuity 1562 may include one or more ALU circuits 1601, optional vector/single instruction multiple data (SIMD) circuits 1603, load/store circuits 1605, branch/jump circuits 1607, and/or Floating-point unit (FPU) circuits 1609. ALU circuits 1601 perform integer arithmetic and/or Boolean operations. Vector/SIMD circuits 1603 perform vector/SIMD operations on packed data (such as SIMD/vector registers). Load/store circuits 1605 execute load and store instructions to load data from memory into registers or store from registers to memory. Load/store circuits 1605 may also generate addresses. Branch/jump circuits 1607 cause a branch or jump to a memory address depending on the instruction. FPU circuits 1609 perform floating-point arithmetic. The width of the execution unit(s) circuitry 1562 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Example Register Architecture.

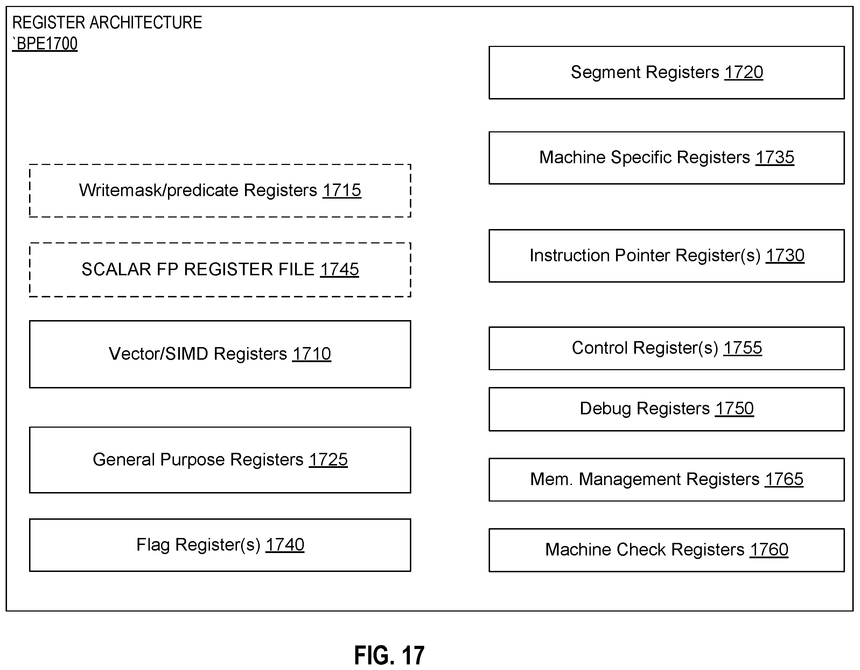

FIG. 17 is a block diagram of a register architecture 1700 according to some examples. As illustrated, the register architecture 1700 includes vector/SIMD registers 1710 that vary from 128-bit to 1,024 bits width. In some examples, the vector/SIMD registers 1710 are physically 512-bits and, depending upon the mapping, only some of the lower bits are used. For example, in some examples, the vector/SIMD registers 1710 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1700 includes writemask/predicate registers 1715. For example, in some examples, there are 8 writemask/predicate registers (sometimes called k0 through k7) that are each 16-bit, 32-bit, 64-bit, or 128-bit in size. Writemask/predicate registers 1715 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1715 corresponds to a data element position of the destination. In other examples, the writemask/predicate registers 1715 are scalable and consists of a set number of enable bits for a given vector element (e.g., 8 enable bits per 64-bit vector element).

The register architecture 1700 includes a plurality of general-purpose registers 1725. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1700 includes scalar floating-point (FP) register file 1745 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1740 (e.g., EFLAGS, RFLAGS, etc.) store status and control information for arithmetic, compare, and system operations. For example, the one or more flag registers 1740 may store condition code information such as carry, parity, auxiliary carry, zero, sign, and overflow. In some examples, the one or more flag registers 1740 are called program status and control registers.

Segment registers 1720 contain segment points for use in accessing memory. In some examples, these registers are referenced by the names CS, DS, SS, ES, FS, and GS.

Machine specific registers (MSRs) 1735 control and report on processor performance. Most MSRs 1735 handle system-related functions and are not accessible to an application program. Machine check registers 1760 consist of control, status, and error reporting MSRs that are used to detect and report on hardware errors.

One or more instruction pointer register(s) 1730 store an instruction pointer value. Control register(s) 1755 (e.g., CR0-CR4) determine the operating mode of a processor (e.g., processor 1370, 1380, 1338, 1315, and/or 1400) and the characteristics of a currently executing task. Debug registers 1750 control and allow for the monitoring of a processor or core's debugging operations.

Memory (mem) management registers 1765 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1700 may, for example, be used in register file / memory 'ISAB08, or physical register file(s) circuitry 15 58.

Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

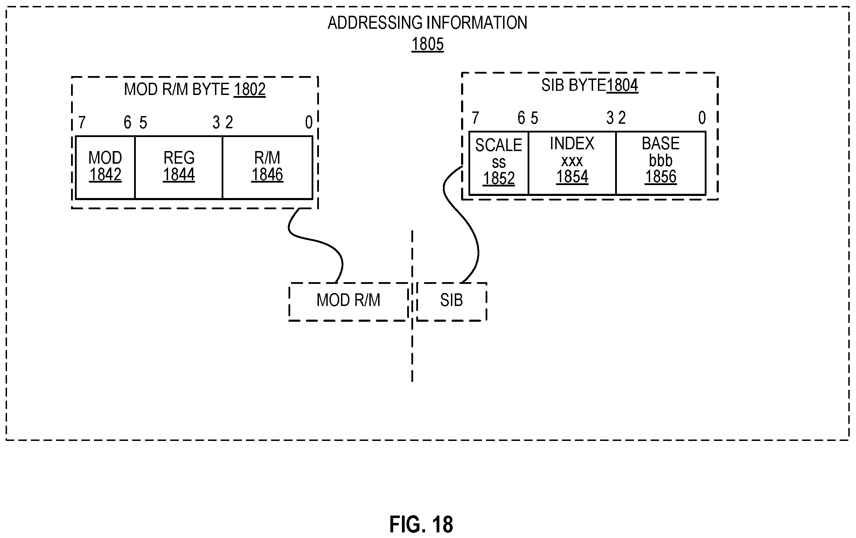

FIG. 18 illustrates examples of the addressing information field 905. In this illustration, an optional MOD R/M byte 1802 and an optional Scale, Index, Base (SIB) byte 1804 are shown. The MOD R/M byte 1802 and the SIB byte 1804 are used to encode up to two operands of an instruction, each of which is a direct register or effective memory address. Note that both of these fields are optional in that not all instructions include one or more of these fields. The MOD R/M byte 1802 includes a MOD field 1842, a register (reg) field 1844, and R/M field 1846.

The content of the MOD field 1842 distinguishes between memory access and non-memory access modes. In some examples, when the MOD field 1842 has a binary value of 11 (11b), a register-direct addressing mode is utilized, and otherwise a register-indirect addressing mode is used.

The register field 1844 may encode either the destination register operand or a source register operand or may encode an opcode extension and not be used to encode any instruction operand. The content of register field 1844, directly or through address generation, specifies the locations of a source or destination operand (either in a register or in memory). In some examples, the register field 1844 is supplemented with an additional bit from a prefix (e.g., prefix 901) to allow for greater addressing.

The R/M field 1846 may be used to encode an instruction operand that references a memory address or may be used to encode either the destination register operand or a source register operand. Note the R/M field 1846 may be combined with the MOD field 1842 to dictate an addressing mode in some examples.

The SIB byte 1804 includes a scale field 1852, an index field 1854, and a base field 1856 to be used in the generation of an address. The scale field 1852 indicates a scaling factor. The index field 1854 specifies an index register to use. In some examples, the index field 1854 is supplemented with an additional bit from a prefix (e.g., prefix 901) to allow for greater addressing. The base field 1856 specifies a base register to use. In some examples, the base field 1856 is supplemented with an additional bit from a prefix (e.g., prefix 901) to allow for greater addressing. In practice, the content of the scale field 1852 allows for the scaling of the content of the index field 1854 for memory address generation (e.g., for address generation that uses $2^{scale}$ * index + base).

Some addressing forms utilize a displacement value to generate a memory address. For example, a memory address may be generated according to $2^{scale}$ * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 907 provides this value. Additionally, in some examples, a displacement factor usage is encoded in the MOD field of the addressing information field 905 that indicates a compressed displacement scheme for which a displacement value is calculated and stored in the displacement field 907.

In some examples, the immediate value field 909 specifies an immediate value for the instruction. An immediate value may be encoded as a 1-byte value, a 2-byte value, a 4-byte value, etc.

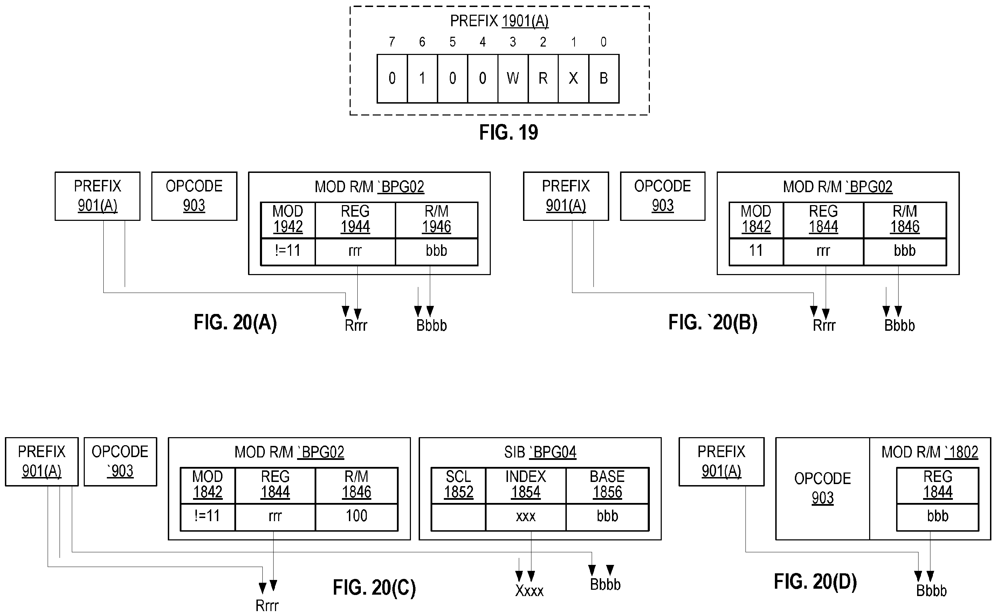

FIG. 19 illustrates examples of a first prefix 901(A). In some examples, the first prefix 901(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 901(A) may specify up to three registers using 3-bit fields depending on the format: 1) using the reg field 1844 and the R/M field 1846 of the MOD R/M byte 1802; 2) using the MOD R/M byte 1802 with the SIB byte 1804 including using the reg field 1844 and the base field 1856 and index field 1854; or 3) using the register field of an opcode.

In the first prefix 901(A), bit positions 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 ($2^4$) registers to be addressed, whereas the MOD R/M reg field 1844 and MOD R/M R/M field 1846 alone can each only address 8 registers.

In the first prefix 901(A), bit position 2 (R) may be an extension of the MOD R/M reg field 1844 and may be used to modify the MOD R/M reg field 1844 when that field encodes a general-purpose register, a 64-bit packed data register (e.g., a SSE register), or a control or debug register. R is ignored when MOD R/M byte 1802 specifies other registers or defines an extended opcode.

Bit position 1 (X) may modify the SIB byte index field 1854.

Bit position 0 (B) may modify the base in the MOD R/M R/M field 1846 or the SIB byte base field 1856; or it may modify the opcode register field used for accessing general purpose registers (e.g., general purpose registers 1725).

FIGS. 20(A)-(D) illustrate examples of how the R, X, and B fields of the first prefix 901(A) are used. FIG. 20(A) illustrates R and B from the first prefix 901(A) being used to extend the reg field 1844 and R/M field 1846 of the MOD R/M byte 1802 when the SIB byte 18 04 is not used for memory addressing. FIG. 20(B) illustrates R and B from the first prefix 901(A) being used to extend the reg field 1844 and R/M field 1846 of the MOD R/M byte 1802 when the SIB byte 18 04 is not used (register-register addressing). FIG. 20(C) illustrates R, X, and B from the first prefix 901(A) being used to extend the reg field 1844 of the MOD R/M byte 1802 and the index field 1854 and base field 1856 when the SIB byte 1804 being used for memory addressing. FIG. 20(D) illustrates B from the first prefix 901(A) being used to extend the reg field 1844 of the MOD R/M byte 1802 when a register is encoded in the opcode 903.

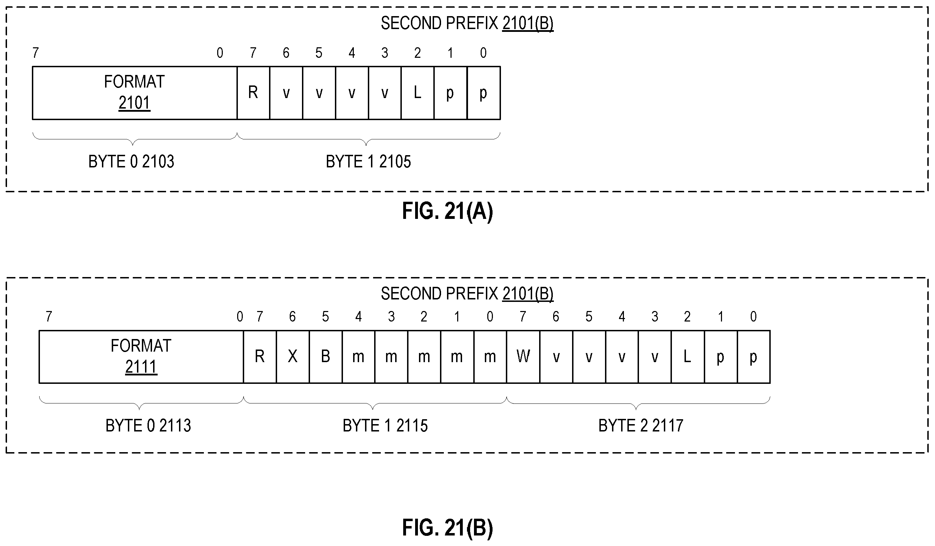

FIGS. 21(A)-(B) illustrate examples of a second prefix 901(B). In some examples, the second prefix 901(B) is an example of a VEX prefix. The second prefix 901(B) encoding allows instructions to have more than two operands, and allows SIMD vector registers (e.g., vector/SIMD registers 1710) to be longer than 64-bits (e.g., 128-bit and 256-bit). The use of the second prefix 901(B) provides for three-operand (or more) syntax. For example, previous two-operand instructions performed operations such as A = A + B, which overwrites a source operand. The use of the second prefix 901(B) enables operands to perform nondestructive operations such as A = B + C.

In some examples, the second prefix 901(B) comes in two forms - a two-byte form and a three-byte form. The two-byte second prefix 901(B) is used mainly for 128-bit, scalar, and some 256-bit instructions; while the three-byte second prefix 901(B) provides a compact replacement of the first prefix 901(A) and 3-byte opcode instructions.

FIG. 21(A) illustrates examples of a two-byte form of the second prefix 901(B). In one example, a format field 2101 (byte 0 2103) contains the value C5H. In one example, byte 1 2105 includes an "R" value in bit[7]. This value is the complement of the "R" value of the first prefix 901(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1846 to encode the instruction operand that references a memory address or encode either the destination register operand or a source register operand.

Instructions that use this prefix may use the MOD R/M reg field 1844 to encode either the destination register operand or a source register operand, or to be treated as an opcode extension and not used to encode any instruction operand.

For instruction syntax that support four operands, vvvv, the MOD R/M R/M field 1846 and the MOD R/M reg field 1844 encode three of the four operands. Bits[7:4] of the immediate value field 909 are then used to encode the third source register operand.

FIG. 21(B) illustrates examples of a three-byte form of the second prefix 901(B). In one example, a format field 2111 (byte 0 2113) contains the value C4H. Byte 1 2115 includes in bits[7:5] "R," "X," and "B" which are the complements of the same values of the first prefix 901(A). Bits[4:0] of byte 1 2115 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 2117 is used similar to W of the first prefix 901(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1846 to encode the instruction operand that references a memory address or encode either the destination register operand or a source register operand.

Instructions that use this prefix may use the MOD R/M reg field 1844 to encode either the destination register operand or a source register operand, or to be treated as an opcode extension and not used to encode any instruction operand.

For instruction syntax that support four operands, vvvv, the MOD R/M R/M field 1846, and the MOD R/M reg field 1844 encode three of the four operands. Bits[7:4] of the immediate value field 909 are then used to encode the third source register operand.

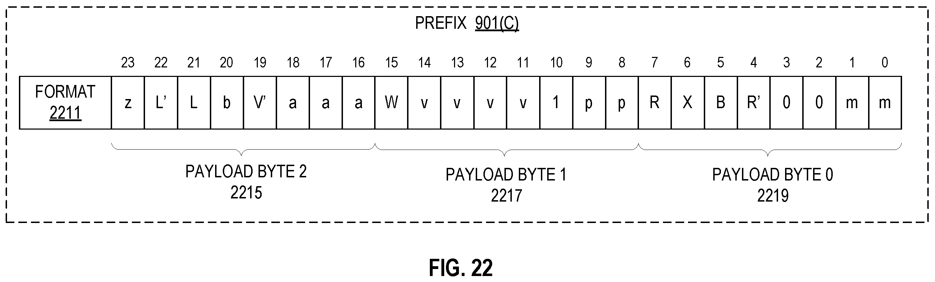

FIG. 22 illustrates examples of a third prefix 901(C). In some examples, the third prefix 901(C) is an example of an EVEX prefix. The third prefix 901(C) is a four-byte prefix.

The third prefix 901(C) can encode 32 vector registers (e.g., 128-bit, 256-bit, and 512-bit registers) in 64-bit mode. In some examples, instructions that utilize a writemask/opmask (see discussion of registers in a previous figure, such as FIG. 17) or predication utilize this prefix. Opmask register allow for conditional processing or selection control. Opmask instructions, whose source/destination operands are opmask registers and treat the content of an opmask register as a single value, are encoded using the second prefix 901(B).

The third prefix 901(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 901(C) is a format field 2211 that has a value, in one example, of 62H. Subsequent bytes are referred to as payload bytes 2215-2219 and collectively form a 24-bit value of P[23:0] providing specific capability in the form of one or more fields (detailed herein).

In some examples, P[1:0] of payload byte 2219 are identical to the low two mm bits. P[3:2] are reserved in some examples. Bit P[4] (R') allows access to the high 16 vector register set when combined with P[7] and the MOD R/M reg field 1844. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 1844 and MOD R/M R/M field 1846. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 901(A) and second prefix 911(B) and may serve as an opcode extension bit or operand size promotion.

P[18:16] specify the index of a register in the opmask (writemask) registers (e.g., writemask/predicate registers 1715). In one example, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P [22:21]). P[23] indicates support for merging-writemasking (e.g., when set to 0) or support for zeroing and merging-writemasking (e.g., when set to 1).

Example examples of encoding of registers in instructions using the third prefix 901(C) are detailed in the following tables.

Table 1: 32-Register Support in 64-bit Mode

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | | vvvv | GPR, Vector | 2nd Source or Destination |

(continued)

|  | 4 | 3 | [2:0] | REG. TYPE | COMMON USAGES |
|---|---|---|---|---|---|
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

Table 2: Encoding Register Specifiers in 32-bit Mode

|  | [2:0] | REG. TYPE | COMMON USAGES |
|---|---|---|---|
| REG | MOD R/M reg | GPR, Vector | Destination or Source |
| VVVV | vvvv | GPR, Vector | 2nd Source or Destination |
| RM | MOD R/M R/M | GPR, Vector | 1st Source or Destination |
| BASE | MOD R/M R/M | GPR | Memory addressing |
| INDEX | SIB.index | GPR | Memory addressing |
| VIDX | SIB.index | Vector | VSIB memory addressing |

Table 3: Opmask Register Specifier Encoding

|  | [2:0] | REG. TYPE | COMMON USAGES |
|---|---|---|---|
| REG | MOD R/M Reg | k0-k7 | Source |
| VVVV | vvvv | k0-k7 | 2nd Source |
| RM | MOD R/M R/M | k0-k7 | 1st Source |
| {k1} | aaa | k0-k7 | Opmask |

Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

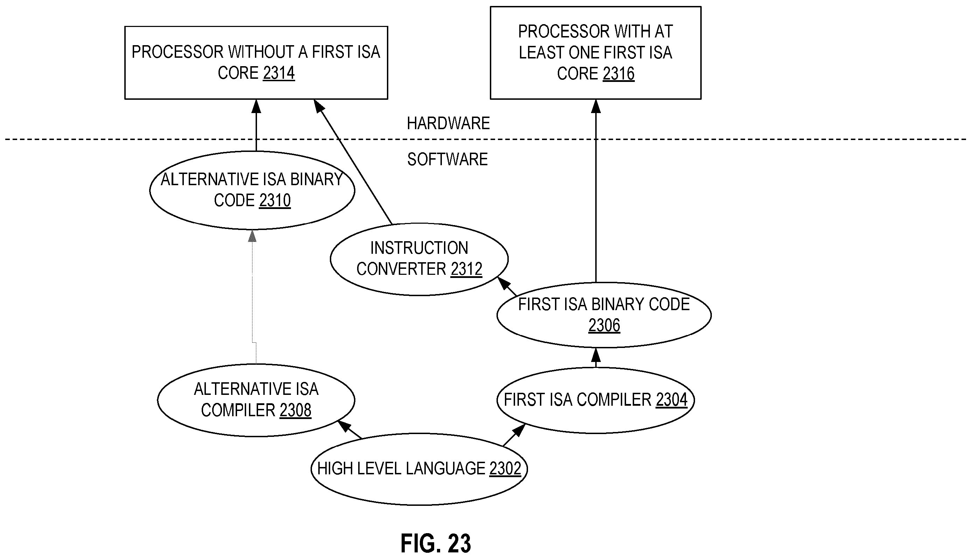

FIG. 23 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 23 shows a program in a high-level language 2302 may be compiled using a first ISA compiler 2304 to generate first ISA binary code 2306 that may be natively executed by a processor with at least one first ISA core 2316. The processor with at least one first ISA core 2316 represents any processor that can perform substantially the same functions as an Intel® processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 2304 represents a compiler that is operable to generate first ISA binary code 2306 (e.g., object code) that can, with or without additional linkage processing, be executed on the processor with at least one first ISA core 2316. Similarly, FIG. 23 shows the program in the high-level language 2302 may be compiled using an alternative ISA compiler 2308 to generate alternative ISA binary code 2310 that may be natively executed by a processor without a first ISA core 2314. The instruction converter 2312 is used to convert the first ISA binary code 2306 into code that may be natively executed by the processor without a first ISA core 2314. This converted code is not necessarily to be the same as the alternative ISA binary code 2310; however, the converted code will accomplish the general operation and be made up of instructions from the alternative ISA. Thus, the instruction converter 2312 represents software, firmware, hardware, or a combination thereof that, through emulation, simulation or any other process, allows a processor

**EP 4 489 342 B1**

or other electronic device that does not have a first ISA processor or core to execute the first ISA binary code 2306.

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

The specification and drawings are, accordingly, to be regarded in an illustrative rather than a restrictive sense. It will, however, be evident that various modifications and changes may be made thereunto without departing from the broader scope of the disclosure as set forth in the claims.

**Claims**

1. An apparatus (300) comprising:

    a reconfigurable fully homomorphic encryption accelerator (403) comprising:

18

a plurality of compute elements to support operations on polynomials with degree (N*M)*1024, M greater than 1;
an array of tiles (340), each tile (409) comprising one or more of the plurality of the compute elements (503);
wherein, the compute elements are to:

perform Number-Theoretic-Transforms, NTT, and inverse-NTT, iNNT, operations on a plurality of independent polynomials (A, B, C, D) with degree N * 1024, and
convert output coefficients of the plurality of independent polynomials into a word-interleaved form,

wherein the plurality of compute elements are to operate in a bypass mode to convert the word-interleaved form of the output coefficients to contiguous form without modifying without impacting values of the output coefficients; and
a scratch pad memory (302) to store coefficients used by the plurality of compute elements to perform the NTT and iNTT operations; and

memory (320) to store data to be processed by the reconfigurable fully homomorphic encryption accelerator; wherein
the word-interleaved form is where coefficients of the plurality of independent polynomials are interleaved ($A_0$, ..., $A_{63}$, $B_0$, ..., $B_{63}$, $C_0$, ..., $C_{63}$, $D_0$, ..., $D_{63}$) within a same memory block (501) in each tile (409); and
the contiguous form is where coefficients of a same polynomial of the plurality of independent polynomials ($A_0$, ... $A_{255}$) are in a same memory block (501) in each tile (409).

2. The apparatus of claim 1, wherein the reconfigurable fully homomorphic encryption accelerator is to configure the plurality of compute elements to operate in a bypass mode in response to a received polynomial iNTT data movement instruction.

3. The apparatus of claim 2, further comprising:

a first 2:1 multiplexer (702,704) coupled to a first output of a compute element (710) and to a first input to the compute element, the first 2:1 multiplexer to select between the first input and the first output; and
a second 2:1 multiplexer (702,704) coupled to a second output of the compute element and to a second input to the compute element, the second 2:1 multiplexer to select between the second input and the second output.

4. The apparatus of claim 3, wherein the first 2:1 multiplexer to select the first input and the second 2:1 multiplexer to select the second input when configured in bypass mode.

5. The apparatus of claim 4, wherein the first input is a, the second input is b, the first output is a+b * a twiddle factor, and the second output is a-b * the twiddle factor.

6. The apparatus of claim 5, wherein a is 32 bits and b is 32 bits.

7. The apparatus of any of claims 1 to 6, wherein N is fixed during runtime and included in a received polynomial iNTT data movement instruction as metadata prior to execution of a workload.

8. The apparatus of any of claims 1 to 6, wherein inputs to a compute element are polynomial input coefficients for NTT/iNTT operations.

9. The apparatus of any of claims 1 to 6, wherein, M is 16.

10. A method comprising:

a reconfigurable fully homomorphic encryption accelerator (403) comprising:

supporting operations on polynomials with degree (N*M)*1024, M greater than 1, by a plurality of compute elements (503) in an array of tiles (340) in the reconfigurable fully homomorphic encryption accelerator;
performing, by the compute elements, Number-Theoretic-Transforms, NTT, and inverse-NTT, iNNT, operations on a plurality of independent polynomials (A, B, C, D) with degree N * 1024;
converting, by the compute elements, output coefficients of the plurality of independent polynomials into a word-interleaved form, wherein the plurality of compute elements operating in a bypass mode to convert the word-interleaved form of the output coefficients to contiguous form without modifying without impacting values of the output coefficients;

storing, in a scratch pad memory (302), coefficients used by the plurality of compute elements to perform the NTT and iNTT operations; and

storing, in a memory (320), data to be processed by the reconfigurable fully homomorphic encryption accelerator; wherein

the word-interleaved form is where coefficients of the plurality of independent polynomials are interleaved (A0, ..., A63, B0, ..., B63, C0, ..., C63, D0, ..., D63) within a same memory block (501) in each tile (409); and

the contiguous form is where coefficients of a same polynomial of the plurality of independent polynomials (A0, ... A255) are in a same memory block (501) in each tile (409).

11. The method of claim 10, further comprising:

configuring, by the reconfigurable fully homomorphic encryption accelerator, the plurality of compute elements to operate in a bypass mode in response to a received polynomial iNTT data movement instruction.

12. The method of claim 10, wherein N is fixed during runtime and included in a received polynomial iNTT data movement instruction as metadata prior to execution of a workload.

13. The method of any of claims 10 to 12, wherein inputs to a compute element are polynomial input coefficients for NTT/iNTT operations.

14. Machine-readable storage including machine-readable instructions, when executed, to implement the method of any one of claims 10 to 13.

**Patentansprüche**

1. Einrichtung (300), die Folgendes umfasst:

einen rekonfigurierbaren Beschleuniger (403) für vollständig homomorphe Verschlüsselung, der Folgendes umfasst:

mehrere Rechenelemente zur Unterstützung von Operationen an Polynomen des Grads (N*M)*1024, wobei M größer als 1 ist;

ein Array von Kacheln (340), wobei jede Kachel (409) eines oder mehrere der mehreren Rechenelemente (503) umfasst;

wobei die Rechenelemente ausgelegt sind zum:

Durchführen von Number-Theoretic-Transforms- bzw. NTT- und Invers-NTT- bzw. iNNT-Operationen an mehreren unabhängigen Polynomen (A, B, C, D) des Grads N * 1024 und

Umwandeln von Ausgangskoeffizienten der mehreren unabhängigen Polynome in eine wortverschachtelte Form,

wobei die mehreren Rechenelemente in einem Umgehungsmodus arbeiten sollen, um die wortverschachtelte Form der Ausgangskoeffizienten ohne Modifizierung ohne Auswirkung auf Werte der Ausgangskoeffizienten in eine zusammenhängende Form umzuwandeln; und

einen Scratchpad-Speicher (302) zum Speichern von Koeffizienten, die durch die mehreren Rechenelemente verwendet werden, um die NTT- und iNTT-Operationen durchzuführen; und

einen Speicher (320) zum Speichern von Daten, die durch den rekonfigurierbaren Beschleuniger für vollständig homomorphe Verschlüsselung verarbeitet werden sollen;

wobei

in der wortverschachtelten Form Koeffizienten der mehreren unabhängigen Polynome innerhalb eines gleichen Speicherblocks (501) in jeder Kachel (409) verschachtelt sind ($A_0$, ..., $A_{63}$, $B_0$, ..., $B_{63}$, $C_0$, ..., $C_{63}$, $D_0$, ..., $D_{63}$); und

in der zusammenhängenden Form Koeffizienten eines gleichen Polynoms der mehreren unabhängigen Polynome ($A_0$, ... $A_{255}$) sich in einem gleichen Speicherblock (501) in jeder Kachel (409) befinden.

2. Einrichtung nach Anspruch 1, wobei der rekonfigurierbare Beschleuniger für vollständig homomorphe Verschlüsselung dazu ausgelegt ist, die mehreren Rechenelemente als Reaktion auf eine empfangene Polynom-iNTT-Datenbewegungsanweisung so zu konfigurieren, dass sie in einem Umgehungsmodus arbeiten.

3. Einrichtung nach Anspruch 2, die ferner Folgendes umfasst:

einen ersten 2:1-Multiplexer (702,704), der mit einem ersten Ausgang eines Rechenelements (710) und mit einem ersten Eingang des Rechenelements gekoppelt ist, wobei der erste 2:1-Multiplexer zwischen dem ersten Eingang und dem ersten Ausgang auswählen soll; und
einen zweiten 2:1-Multiplexer (702,704), der mit einem zweiten Ausgang des Rechenelements und mit einem zweiten Eingang des Rechenelements gekoppelt ist, wobei der zweite 2:1-Multiplexer zwischen dem zweiten Eingang und dem zweiten Ausgang auswählen soll.

4. Einrichtung nach Anspruch 3, wobei bei Konfiguration im Umgehungsmodus der erste 2:1-Multiplexer den ersten Eingang auswählen soll und der zweite 2:1-Multiplexer den zweiten Eingang auswählen soll.

5. Einrichtung nach Anspruch 4, wobei der erste Eingang a ist, der zweite Eingang b ist, der erste Ausgang a+b * ein Twiddle-Faktor ist und der zweite Ausgang a-b * der Twiddle-Faktor ist.

6. Einrichtung nach Anspruch 5, wobei a 32 Bit ist und b 32 Bit ist.

7. Einrichtung nach einem der Ansprüche 1 bis 6, wobei N während der Laufzeit einen festen Wert hat und in einer empfangenen Polynom-iNTT-Datenbewegungsanweisung als Metadaten vor der Ausführung einer Arbeitslast enthalten ist.

8. Einrichtung nach einem der Ansprüche 1 bis 6, wobei Eingaben in ein Rechenelement polynomiale Eingangskoeffizienten für NTT/iNTT-Operationen sind.

9. Einrichtung nach einem der Ansprüche 1 bis 6, wobei M 16 ist.

10. Verfahren, das Folgendes umfasst:
einen rekonfigurierbaren Beschleuniger (403) für vollständig homomorphe Verschlüsselung, der Folgendes umfasst:

Unterstützen von Operationen an Polynomen des Grads (N*M)*1024, wobei M größer als 1 ist, durch mehrere Rechenelemente (503) in einem Array von Kacheln (340) in dem rekonfigurierbaren Beschleuniger für vollständig homomorphe Verschlüsselung;
Durchführen, durch die Rechenelemente, von Number-Theoretic-Transforms- bzw. NTT- und Invers-NTT- bzw. iNNT-Operationen an mehreren unabhängigen Polynomen (A, B, C, D) des Grads N * 1024;
Umwandeln, durch die Rechenelemente, von Ausgangskoeffizienten der mehreren unabhängigen Polynome in eine wortverschachtelte Form, wobei die mehreren Rechenelemente in einem Umgehungsmodus arbeiten, um die wortverschachtelte Form der Ausgangskoeffizienten ohne Modifizierung ohne Auswirkung auf Werte der Ausgangskoeffizienten in eine zusammenhängende Form umzuwandeln;
Speichern, in einem Scratchpad-Speicher (302), von Koeffizienten, die durch die mehreren Rechenelemente verwendet werden, um die NTT- und iNTT-Operationen durchzuführen; und
Speichern, in einem Speicher (320), von Daten, die durch den rekonfigurierbaren Beschleuniger für vollständig homomorphe Verschlüsselung verarbeitet werden sollen;
wobei
in der wortverschachtelten Form Koeffizienten der mehreren unabhängigen Polynome innerhalb eines gleichen Speicherblocks (501) in jeder Kachel (409) verschachtelt sind (A0, ..., A63, B0, ..., B63, C0, ..., C63, D0, ..., D63); und
in der zusammenhängenden Form Koeffizienten eines gleichen Polynoms der mehreren unabhängigen Polynome (A0, ... A255) sich in einem gleichen Speicherblock (501) in jeder Kachel (409) befinden.

11. Verfahren nach Anspruch 10, das ferner Folgendes umfasst:
derartiges Konfigurieren, durch den rekonfigurierbaren Beschleuniger für vollständig homomorphe Verschlüsselung, der mehreren Rechenelemente, dass sie in einem Umgehungsmodus arbeiten, als Reaktion auf eine empfangene Polynom-iNTT-Datenbewegungsanweisung.

12. Verfahren nach Anspruch 10, wobei N während der Laufzeit einen festen Wert hat und in einer empfangenen Polynom-iNTT-Datenbewegungsanweisung als Metadaten vor der Ausführung einer Arbeitslast enthalten ist.

**13.** Verfahren nach einem der Ansprüche 10 bis 12, wobei Eingaben in ein Rechenelement polynomiale Eingangskoeffizienten für NTT/iNTT-Operationen sind.

**14.** Maschinenlesbarer Speicher, der maschinenlesbare Anweisungen beinhaltet, die bei Ausführung das Verfahren nach einem der Ansprüche 10-13 implementieren sollen.

**Revendications**

**1.** Appareil (300) comprenant :
un accélérateur de chiffrement (403) entièrement homomorphique reconfigurable comprenant :

une pluralité d'éléments de calcul pour prendre en charge des opérations sur des polynômes de degré (N*M) *1024, avec M supérieur à 1 ;
un réseau de tuiles (340), chaque tuile (409) comprenant un ou plusieurs éléments parmi la pluralité d'éléments de calcul (503) ;
où les éléments de calcul sont conçus pour :

effectuer des opérations de transformée arithmétique selon la théorie des nombres, NTT, et d'inverse-NTT, iNNT sur une pluralité de polynômes indépendants (A, B, C, D) de degré N*1024, et
convertir des coefficients de sortie de la pluralité de polynômes indépendants en une forme entrelacée par mots, où la pluralité d'éléments de calcul doivent fonctionner dans un mode de contournement pour convertir la forme entrelacée par mots des coefficients de sortie en une forme contiguë sans modification, sans affecter les valeurs des coefficients de sortie ; et
une mémoire de bloc-notes (302) pour stocker les coefficients utilisés par la pluralité d'éléments de calcul pour effectuer les opérations NTT et iNTT ; et
une mémoire (320) pour stocker des données à traiter par l'accélérateur de chiffrement entièrement homomorphique reconfigurable ; où
la forme entrelacée par mots se trouve là où les coefficients de la pluralité de polynômes indépendants sont entrelacés ($A_0$, ..., $A_{63}$, $B_0$, ..., $B_{63}$, $C_0$, ..., $C_{63}$, $D_0$, ..., $D_{63}$) au sein d'un même bloc mémoire (501) dans chaque tuile (409) ; et
la forme contiguë se trouve là où les coefficients d'un même polynôme de la pluralité de polynômes indépendants ($A_0$, ... $A_{255}$) sont dans un même bloc mémoire (501) dans chaque tuile (409).

**2.** Appareil selon la revendication 1, dans lequel l'accélérateur de chiffrement entièrement homomorphique reconfigurable est destiné à configurer la pluralité d'éléments de calcul pour fonctionner dans un mode de dérivation en réponse à la réception d'une instruction de déplacement de données iNTT polynomiales.

**3.** Appareil selon la revendication 2, comprenant en outre :

un premier multiplexeur 2:1 (702, 704) couplé à une première sortie d'un élément de calcul (710) et à une première entrée de l'élément de calcul, le premier multiplexeur 2:1 effectuant une sélection entre la première entrée et la première sortie ; et
un deuxième multiplexeur 2:1 (702, 704) couplé à une deuxième sortie de l'élément de calcul et à une deuxième entrée de l'élément de calcul, le deuxième multiplexeur 2:1 effectuant une sélection entre la deuxième entrée et la deuxième sortie.

**4.** Appareil selon la revendication 3, dans lequel le premier multiplexeur 2:1 sélectionne la première entrée et le deuxième multiplexeur 2:1 sélectionne la deuxième entrée lorsqu'il est configuré en mode de dérivation.

**5.** Appareil selon la revendication 4, dans lequel la première entrée est a, la deuxième entrée est b, la première sortie est a+b * un facteur de rotation, et la deuxième sortie est a-b * le facteur de rotation.

**6.** Appareil selon la revendication 5, dans lequel a est égal à 32 bits et b est égal à 32 bits.

**7.** Appareil selon l'une quelconque des revendications 1 à 6, dans lequel N est fixé pendant l'exécution et inclus dans une instruction reçue de déplacement de données iNTT polynomiales en tant que métadonnées avant l'exécution d'une charge de travail.

8. Appareil selon l'une quelconque des revendications 1 à 6, dans lequel les entrées dans un élément de calcul sont des coefficients d'entrée polynomiaux pour des opérations NTT/iNTT.

9. Appareil selon l'une quelconque des revendications 1 à 6, dans lequel M est égal à 16.

10. Procédé comprenant :
un accélérateur de chiffrement (403) entièrement homomorphique reconfigurable comprenant :

la prise en charge d'opérations sur des polynômes de degré (N*M)*1024, M étant supérieur à 1, par une pluralité d'éléments de calcul (503) dans un réseau de tuiles (340) dans l'accélérateur de chiffrement entièrement homomorphique reconfigurable ;
l'exécution, par les éléments de calcul, d'opérations de transformée arithmétique selon la théorie des nombres, NTT, et d'inverse-NTT, iNNT sur une pluralité de polynômes indépendants (A, B, C, D) de degré N*1024 ;
la conversion, par les éléments de calcul, des coefficients de sortie de la pluralité de polynômes indépendants en une forme entrelacée par mots, où la pluralité d'éléments de calcul fonctionnant dans un mode de contournement sont destinés à convertir la forme entrelacée par mots des coefficients de sortie en une forme contiguë sans modification, sans affecter les valeurs des coefficients de sortie ;
le stockage, dans une mémoire de bloc-notes (302), des coefficients utilisés par la pluralité d'éléments de calcul pour effectuer les opérations NTT et iNTT ; et
le stockage, dans une mémoire (320), des données à traiter par l'accélérateur de chiffrement entièrement homomorphique reconfigurable ; où
la forme entrelacée par mots se trouve là où les coefficients de la pluralité de polynômes indépendants sont entrelacés (A0, ..., A63, B0, ..., B63, C0, ..., C63, D0, ..., D63) au sein d'un même bloc mémoire (501) dans chaque tuile (409) ; et
la forme contiguë se trouve là où les coefficients d'un même polynôme de la pluralité de polynômes indépendants (A0, ... A255) sont dans un même bloc mémoire (501) dans chaque tuile (409).

11. Procédé selon la revendication 10, comprenant en outre l'étape suivante :
configurer, par l'accélérateur de chiffrement entièrement homomorphique reconfigurable, la pluralité d'éléments de calcul pour fonctionner dans un mode de dérivation en réponse à la réception d'une instruction de déplacement de données iNTT polynomiales.

12. Procédé selon la revendication 10, dans lequel N est fixé pendant l'exécution et inclus dans une instruction reçue de déplacement de données iNTT polynomiales en tant que métadonnées avant l'exécution d'une charge de travail.

13. Procédé selon l'une quelconque des revendications 10 à 12, dans lequel les entrées dans un élément de calcul sont des coefficients d'entrée polynomiaux pour des opérations NTT/iNTT.

14. Stockage lisible par machine incluant des instructions lisibles par machine, qui, lorsqu'elles sont exécutées, mettent en œuvre le procédé selon l'une quelconque des revendications 10 à 13.

100

102

| | | | | | | | | |
|---|---|---|---|---|---|---|---|---|
| $A_0..$ $A_{255}$ | 0 | 0 | 0 | 0 | 0 | 0 | 0 | |
| 0 | 0 | 0 | 0 | 0 | 0 | 0 | 0 | |
| $A_{256}.$ $A_{511}$ | 0 | 0 | 0 | 0 | 0 | 0 | 0 | |
| 0 | 0 | 0 | 0 | 0 | 0 | 0 | 0 | |
| $A_{512}.$ $A_{767}$ | 0 | 0 | 0 | 0 | 0 | 0 | 0 | |
| 0 | 0 | 0 | 0 | 0 | 0 | 0 | 0 | |
| $A_{768}.$ $A_{1023}$ | 0 | 0 | 0 | 0 | 0 | 0 | 0 | |
| 0 | 0 | 0 | 0 | 0 | 0 | 0 | 0 | |

SCRATCH PAD MEMORY 106

A 104

SCRATCH PAD MEMORY 106

FIG. 1

FIG. 2

FIG. 3

**FIG. 4**

Register File Banks 501

409

Compute
Elements
503

72W x 16B

16X

CE0

CE1

CE2

CE3

CE63

FIG. 5

403

409

| | $A_0..$ $A_{255}$ | $B_0..$ $B_{255}$ | $C_0..$ $C_{255}$ | $D_0..$ $D_{255}$ | 0 | 0 | 0 | 0 | |
| | 0 | 0 | 0 | 0 | 0 | 0 | 0 | 0 | |
| | $A_{256}..$ $A_{511}$ | $B_{256}..$ $B_{511}$ | $C_{256}..$ $C_{511}$ | $D_{256}..$ $D_{511}$ | 0 | 0 | 0 | 0 | |
| | 0 | 0 | 0 | 0 | 0 | 0 | 0 | 0 | |
| | $A_{512}..$ $A_{767}$ | $B_{512}..$ $B_{767}$ | $C_{512}..$ $C_{767}$ | $D_{512}..$ $D_{767}$ | 0 | 0 | 0 | 0 | |
| | 0 | 0 | 0 | 0 | 0 | 0 | 0 | 0 | |
| | $A_{768}..$ $A_{1023}$ | $B_{768}..$ $B_{1023}$ | $C_{768}..$ $C_{1023}$ | $D_{768}..$ $D_{1023}$ | 0 | 0 | 0 | 0 | |
| | 0 | 0 | 0 | 0 | 0 | 0 | 0 | 0 | |

Scratch Pad Memory 302

A 604

B 606

C 608

D 610

Scratch Pad Memory 302

Compute Engine 340

FIG. 6

**FIG. 7**

403

| | 802 | 810 | 818 | 826 | | | | | |
|---|---|---|---|---|---|---|---|---|---|
| | A0-63 | A256 | A512 | A768 | | | | | |
| | B0-63 | B256 | B512 | B768 | | | | | |
| | C0-63 | C256 | C512 | C768 | | | | | |
| | D0-63 | D256 | D512 | D768 | | | | | |

| | 804 | 812 | 820 | 828 |
|---|---|---|---|---|
| | A64 | A320 | A576 | A832 |
| | B64 | B320 | B576 | B832 |
| | C64 | C320 | C576 | C832 |
| | D64 | D320 | D576 | D832 |

| | 806 | 814 | 822 | 830 |
|---|---|---|---|---|
| | A128 | A384 | A640 | A896 |
| | B128 | B384 | B640 | B896 |
| | C128 | C384 | C640 | C896 |
| | D128 | D384 | D640 | D896 |

| | 808 | 816 | 824 | 832 |
|---|---|---|---|---|
| | A192 | A448 | A704 | A960 |
| | B192 | B448 | B704 | B960 |
| | B192 | C448 | C704 | C960 |
| | D192 | D448 | D704 | D960 |

Scratch Pad Memory 302

604    606    608    610

Compute Engine 340

Scratch Pad Memory 302

FIG. 8

| PREFIX(ES) 901 | OPCODE 903 | ADDRESSING INFORMATION 905 | DISPLACEMENT VALUE 907 | IMMEDIATE VALUE 909 |
|---|---|---|---|---|

## FIG. 9A

## FIG. 9

| OPCODE 903 | ADDRESSING INFORMATION 905 | IMMEDIATE VALUE 909 |
| --- | --- | --- |

| SOURCE ADDR 1 902 | SOURCE ADDR 2 904 | SOURCE ADDR 3 906 | DESTINATION ADDRESS 1 908 | DESTINATION ADDRESS 2 910 |
| --- | --- | --- | --- | --- |

# FIG. 9B

FIG. 10

**FIG. 11**

1200

| Polynomial size | CE utilization | Performance improvement |
|---|---|---|
| 1K | Up to 100% | 16x |
| 2K | Up to 100% | 8x |
| 4K | Up to 100% | 4x |
| 8K | Up to 100% | 2x |
| 16K | 100% | 1x |

FIG. 12

1300

MEMORY
1332

PROCESSOR

IMC
1372

1376  1378

1370

COPROCESSOR
1338

1392

1350

PROCESSOR/
COPROCESSOR

IMC
1382

1388  1386

1380

1352
1394

NW I/F 1390

1396

1354

1398

MEMORY
1334

1316

BUS BRIDGE
1318

I/O DEVICES
1314

AUDIO I/O
1324

PROCESSOR
1315

PCU
1317

1320

KEYBOARD/
MOUSE

1322

COMM
DEVICES

1327

1330

STORAGE

CODE &
DATA

1328

FIG. 13

SPECIAL PURPOSE LOGIC 1408

CORE 1402(A)

CACHE UNIT(S) 1404(A)

CORE 1402(N)

CACHE UNIT(S) 1404(N)

SYSTEM AGENT UNIT 1410

INTEGRATED MEMORY CONTROLLER UNIT(S) 1414

SHARED CACHE UNIT(S) 1406

INTERFACE NETWORK 1412

INTERFACE CONTROLLER UNIT(S) 1416

OTHER DEVICE(S) 1418

SYSTEM-ON-CHIP (SOC) 1400

FIG. 14

PIPELINE 1500

| FETCH 1502 | LENGTH DECODING 1504 | DECODE 1506 | ALLOC. 1508 | RENAMING 1510 | SCHEDULE 1512 | REGISTER READ/ MEMORY READ 1514 | EXECUTE STAGE 1516 | WRITE BACK/ MEMORY WRITE 1518 | EXCEPTION HANDLING 1522 | COMMIT 1524 |

**FIG. 15(A)**

EP 4 489 342 B1

CORE 1590

**FRONT-END UNIT 1530**

BRANCH PREDICTION 1532

INSTRUCTION CACHE 1534

INSTRUCTION TLB 1536

INSTRUCTION FETCH 1538

DECODE CIRCUITRY 1540

**EXECUTION ENGINE UNIT 1550**

RENAME / ALLOCATOR UNIT 1552

RETIREMENT UNIT 1554

SCHEDULER(S) 1556

PHYSICAL REGISTER FILE(S) 1558

EXECUTION UNIT(S) CIRCUITRY 1562

MEMORY ACCESS CIRCUITRY 1564

EXECUTION CLUSTER(S) 1560

MEMORY UNIT 1570

DATA TLB 1572

DATA CACHE 1574

L2 CACHE 1576

**FIG. 15(B)**

EXECUTION  UNIT(S) CIRCUITRY
1662

ALU 1601

VECTOR/SIMD 1603

LOAD/STORE 1605

BRANCH/JUMP 1607

FPU 1609

## FIG. 16

REGISTER ARCHITECTURE
`BPE1700

Segment Registers 1720

Machine Specific Registers 1735

Writemask/predicate Registers 1715

Instruction Pointer Register(s) 1730

SCALAR FP REGISTER FILE 1745

Vector/SIMD Registers 1710

Control Register(s) 1755

Debug Registers 1750

General Purpose Registers 1725

Mem. Management Registers 1765

Flag Register(s) 1740

Machine Check Registers 1760

**FIG. 17**

EP 4 489 342 B1

EP 4 489 342 B1

ADDRESSING INFORMATION
1805

MOD R/M BYTE 1802

| 7 | 6 5 | 3 2 | 0 |
|---|---|---|---|
| MOD 1842 | REG 1844 | R/M 1846 | |

SIB BYTE 1804

| 7 | 6 5 | 3 2 | 0 |
|---|---|---|---|
| SCALE ss 1852 | INDEX xxx 1854 | BASE bbb 1856 | |

MOD R/M    SIB

FIG. 18

## FIG. 19

PREFIX 1901(A)

| 7 | 6 | 5 | 4 | 3 | 2 | 1 | 0 |
|---|---|---|---|---|---|---|---|
| 0 | 1 | 0 | 0 | W | R | X | B |

## FIG. 20(A)

PREFIX 901(A)

OPCODE 903

MOD R/M `BPG02

| MOD 1942 | REG 1944 | R/M 1946 |
|---|---|---|
| !=11 | rrr | bbb |

→ Rrrr
→ Bbbb

## FIG. 20(B)

PREFIX 901(A)

OPCODE 903

MOD R/M `BPG02

| MOD 1842 | REG 1844 | R/M 1846 |
|---|---|---|
| 11 | rrr | bbb |

→ Rrrr
→ Bbbb

## FIG. 20(C)

PREFIX 901(A)

OPCODE `903

MOD R/M `BPG02

| MOD 1842 | REG 1844 | R/M 1846 |
|---|---|---|
| !=11 | rrr | 100 |

SIB `BPG04

| SCL 1852 | INDEX 1854 | BASE 1856 |
|---|---|---|
| | xxx | bbb |

→ Rrrr
→ Xxxx
→ Bbbb

## FIG. 20(D)

PREFIX 901(A)

OPCODE 903

MOD R/M `1802

| REG 1844 |
|---|
| bbb |

→ Bbbb

44

SECOND PREFIX 2101(B)

| | | R | v | v | v | v | L | p | p |
|---|---|---|---|---|---|---|---|---|---|
| FORMAT 2101 | | | | | | | | | |

BYTE 0 2103     BYTE 1 2105

**FIG. 21(A)**

SECOND PREFIX 2101(B)

| | | R | X | B | m | m | m | m | m | W | v | v | v | v | L | p | p |
|---|---|---|---|---|---|---|---|---|---|---|---|---|---|---|---|---|---|
| FORMAT 2111 | | | | | | | | | | | | | | | | | |

BYTE 0 2113     BYTE 1 2115     BYTE 2 2117

**FIG. 21(B)**

PREFIX 901(C)

| | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|---|---|---|---|---|---|
| FORMAT 2211 | z | L' | L | b | V' | a | a | a | W | v | v | v | v | 1 | p | p | R | X | B | R' | 0 | 0 | m | m |

PAYLOAD BYTE 2
2215

PAYLOAD BYTE 1
2217

PAYLOAD BYTE 0
2219

**FIG. 22**

PROCESSOR WITHOUT A FIRST ISA
CORE 2314

PROCESSOR WITH AT
LEAST ONE FIRST ISA
CORE 2316

HARDWARE

SOFTWARE

ALTERNATIVE ISA BINARY
CODE 2310

INSTRUCTION
CONVERTER 2312

FIRST ISA BINARY CODE
2306

ALTERNATIVE ISA
COMPILER 2308

FIRST ISA COMPILER 2304

HIGH LEVEL LANGUAGE 2302

**FIG. 23**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018294950 A1

- US 2023171084 A1